# FASCICULE DE BREVET EUROPEEN

(11) **EP 4 293 886 B1**
(45) Date de publication et mention de la délivrance du brevet: **23.10.2024**
(21) Numéro de dépôt: 23174127.3
(22) Date de dépôt: 17.05.2023
(51) Int. Cl.: H02K 41/03

(54) **MACHINE ÉLECTRIQUE À MOUVEMENT LINÉAIRE**
ELEKTRISCHE MASCHINE MIT LINEARER BEWEGUNG
LINEAR MOTION ELECTRIC MACHINE

(30) Priorité: 14.06.2022 FR 2205708
(43) Date de publication de la demande: 20.12.2023
(73) Titulaire: EE-gine, 49100 Angers (FR)
(72) Inventeur: STREIFF, Frédéric, 49100 Angers (FR)
(74) Mandataire: Cabinet Chaillot

(56) Documents cités:
- EP-A1- 0 352 189
- DE-A1- 4 300 440
- US-B2- 9 722 479

## Description

La présente invention concerne le domaine technique des machines électriques à mouvement linéaire, et porte plus particulièrement sur des machines électriques à mouvement linéaire polyphasées à flux magnétique transversal.

Les machines électriques à mouvement linéaire à flux magnétique ont notamment pour avantage de se passer d'organe mécanique de transmission de puissance, tel qu'une vis à bille ou une vis à rouleaux satellites, et ne créent donc pas de frottement entre les pièces en mouvement.

Ces machines ont fait l'objet de nombreux développements dans l'art antérieur.

Par exemple, la demande de brevet européen EP0352189 A1 divulgue une machine électrique à mouvement linéaire à flux magnétique transversal. Cependant, ce document ne propose pas de mode de réalisation fonctionnel pour une telle machine. En particulier, il ne propose pas d'utiliser des tôles feuilletées dites électriques pour réduire les pertes par courants de Foucault.

La demande de brevet français FR3022708 A1 divulgue également une machine électrique à mouvement linéaire pour laquelle il est possible de réduire les forces de détente en décalant l'un des stators par rapport à l'autre stator dans la direction de déplacement. Cependant, ce document ne propose pas de mode de réalisation fonctionnel de ce décalage permettant de limiter l'entrefer entre le linéator et le stator de manière à améliorer les performances électromagnétiques de la machine. De plus, avec un « simple » décalage du stator, il n'est pas possible de réduire les forces de détente liées aux tolérances de fabrication des éléments constituant le stator.

Par conséquent, les solutions de l'art antérieur proposées pour les machines électriques à mouvement linéaire présentent toujours des inconvénients et des améliorations de ces systèmes sont possibles.

US9722479B2 divulgue aussi une machine électrique à mouvement linéaire.

L'invention a notamment pour objectif de proposer une machine électrique à mouvement linéaire à flux magnétique transversal comprenant des ensembles stator comprenant des tôles empilées selon une direction d'empilement toujours perpendiculaire à la direction de propagation du flux magnétique transversal.

Un autre objectif de l'invention est de proposer une machine comprenant un faible nombre de profils de tôles différents pour les ensembles stator.

Un autre objectif de l'invention est de proposer une machine permettant une solidarisation des tôles des ensembles stator sans perçage, vissage ou déformation des tôles, tout en minimisant les entrefers parasites.

Un autre objectif de l'invention est de proposer une machine pour laquelle les espacements entre les dents des stators sont réglables afin de réduire les forces de détente de la machine.

Un autre objectif de l'invention est de proposer une machine comprenant un ensemble secondaire comprenant une pluralité de tôles empilées selon une direction d'empilement parallèle à la direction de déplacement de l'ensemble secondaire.

Un autre objectif de l'invention est de proposer une machine comprenant un ensemble secondaire comprenant au moins une cavité centrale permettant de limiter un court-circuit magnétique dans l'ensemble secondaire.

Un autre objectif de l'invention est de proposer une machine pour laquelle les entrefers entre les ensembles stator et l'ensemble secondaire sont réglables.

Un autre objectif de l'invention est de proposer une machine configurée pour fonctionner avec un pas polaire faible.

Ainsi, la présente invention a pour objet une machine électrique à mouvement linéaire selon une direction de déplacement, configurée pour fonctionner selon au moins l'un d'un mode moteur, dans lequel une énergie électrique est transformée en énergie mécanique de type mouvement linéaire selon la direction de déplacement, et d'un mode générateur, dans lequel une énergie mécanique de type mouvement linéaire selon la direction de déplacement est transformée en énergie électrique, ladite machine électrique comprenant un ensemble primaire comprenant au moins un ensemble stator configuré pour être fixé à un bâti ; un ensemble secondaire configuré pour se déplacer de manière relative par rapport à l'ensemble primaire selon la direction de déplacement, l'ensemble secondaire comprenant une partie d'interaction au sein de laquelle une pluralité de sous-parties d'interaction sont réparties selon la direction de déplacement, et au moins un arbre, qui est solidaire de la partie d'interaction et s'étend selon la direction de déplacement, chaque ensemble stator étant disposé en regard de la partie d'interaction de l'ensemble secondaire ; des moyens de guidage en translation configurés pour guider le mouvement relatif de l'ensemble secondaire par rapport à l'ensemble primaire ; et un module électrique ; caractérisée par le fait que chaque ensemble stator comprend une culasse qui comprend au moins deux faces latérales de contact, définies de part et d'autre d'un axe parallèle à la direction de déplacement et passant par le centre de la culasse ; au moins deux paires de dents, chaque dent ayant une extrémité de tête configurée pour venir en contact avec une face latérale de contact de la culasse et une extrémité de base, opposée à l'extrémité de tête, configurée pour être orientée vers la partie d'interaction de l'ensemble secondaire, de telle sorte qu'un entrefer est formé entre les dents et les sous-parties d'interaction de l'ensemble secondaire et que lors d'un mouvement relatif de l'ensemble secondaire par rapport à l'ensemble primaire, une sous-partie d'interaction de l'ensemble secondaire se déplace relativement parallèlement à la surface formée par les extrémités de base des dents de l'ensemble stator qui est en regard, les paires de dents étant espacées les unes des autres le long de la culasse selon la direction de déplacement, les dents d'une paire de dents étant agencées en diagonale le long de la culasse, de telle sorte que pour chaque paire de dents, une première dent est en contact avec une face latérale de contact de la culasse et une seconde dent est en contact avec une autre face latérale de contact de la culasse, une bobine entourant chaque dent autour d'une section de corps entre l'extrémité de tête et l'extrémité de base, et chaque dent étant configurée pour interagir magnétiquement avec des sous-parties d'interaction de l'ensemble secondaire en regard ; des moyens de solidarisation configurés pour être aptes à solidariser les dents à la culasse sans déformation des dents ou de la culasse altérant la circulation d'un champ magnétique ou augmentant des pertes fer ; et des moyens de fixation configurés pour fixer l'ensemble stator au bâti ; la machine électrique à mouvement linéaire comprenant en outre au moins l'un parmi des aimants disposés entre des sous-parties d'interaction de la partie d'interaction de l'ensemble secondaire, et des aimants disposés entre les dents et la culasse d'au moins un ensemble stator ; en mode moteur, le module électrique est configuré pour transmettre une alimentation alternative polyphasée aux bobines de manière à générer des champs magnétiques variables dans le temps, chaque bobine étant configurée et alimentée de manière à générer une polarité magnétique à l'extrémité de base de la dent qu'elle entoure et à générer une polarité magnétique opposée à l'extrémité de tête de la dent qu'elle entoure, et les bobines de chaque paire de dents étant configurées pour générer une polarité à l'extrémité de base, respectivement à l'extrémité de tête, de la première dent et pour générer une polarité opposée à l'extrémité de base, respectivement à l'extrémité de tête, de la seconde dent, de manière à créer un bouclage magnétique transversal entre ladite première dent, la culasse et ladite seconde dent, et les bobines de chaque paire de dents étant configurées et alimentées de telle sorte que les champs magnétiques produits varient en fonction des variations de l'alimentation alternative polyphasée de manière à produire un déplacement relatif de l'ensemble secondaire par rapport à l'ensemble primaire ; en mode générateur, le module électrique est configuré pour récupérer des courants électriques générés, dans les bobines entourant les dents de l'ensemble primaire, par des interactions magnétiques formées entre la partie d'interaction de l'ensemble secondaire et les dents de l'ensemble primaire.

Le mode de réalisation décrit ci-dessus propose une configuration fonctionnelle pour une machine électrique à mouvement linéaire configurée pour fonctionner en mode moteur et/ou en mode générateur, pour laquelle les dents des ensembles stator sont fabriquées de manière séparée puis mises en contact latéralement avec les culasses et solidarisées à celles-ci, éventuellement de manière réglable, sans déformation des dents ou des culasses altérant la circulation d'un champ magnétique ou augmentant des pertes fer, contrairement, par exemple, à une fixation par perçage ou vissage, de manière à permettre une circulation optimale des flux magnétiques dans l'ensemble primaire et ainsi obtenir une machine électrique à performances élevées. Un fonctionnement avec un pas polaire faible est également rendu possible grâce à la répartition des dents le long des culasses.

Selon un mode de réalisation, pour au moins une dent, une surface projetée de l'extrémité de base sur la partie d'interaction est supérieure à une surface projetée de la section de corps sur la partie d'interaction.

L'utilisation de dents pour lesquelles la surface projetée de l'extrémité de base sur la partie d'interaction est supérieure à la surface projetée de la section de corps sur la partie d'interaction permet, pour chaque dent, d'augmenter la surface à travers laquelle passe le flux magnétique parcourant la dent et donc la zone d'interaction entre la dent et la partie d'interaction.

Les extrémités de base des dents peuvent, par exemple, présenter un épanouissement qui s'étend selon une direction longitudinale des sous-parties d'interaction en regard et/ou selon la direction de déplacement.

Même avec des dents adoptant les proportions décrites ci-dessus, le bobinage des dents est facile puisque, avec une machine électrique selon l'invention, les dents et les culasses sont indépendantes avant d'être solidarisées. Les dents peuvent ainsi être librement bobinées avant d'être solidarisées aux culasses.

Selon un mode de réalisation, pour au moins un ensemble stator, les moyens de solidarisation comprennent au moins un matériau de type résine configuré pour encapsuler les dents sur la culasse.

L'utilisation d'un matériau de type résine pour les moyens de solidarisation permet, lors du montage, une mise en contact des extrémités de tête des dents et des faces latérales de contact de la culasse, puis, lors de l'utilisation, le maintien des dents en position par rapport à la culasse par encapsulation, sans déformation des dents ou de la culasse. Les performances magnétiques de la machine sont ainsi optimisées. On comprendra également qu'en variante un matériau de type résine peut être utilisé pour coller les extrémités de tête des dents sur les faces latérales de contact de la culasse, les dents n'étant alors pas directement en contact de la culasse.

Selon un mode de réalisation particulier, pour au moins un ensemble stator, les moyens de solidarisation comprennent deux mâchoires, disposées de part et d'autre de la culasse, configurées pour solidariser les dents sur la culasse, chaque mâchoire comprenant au moins une platine, une première mâchoire étant destinée à recevoir les premières dents des paires de dents et une seconde mâchoire étant destinée à recevoir les secondes dents des paires de dents.

Selon un mode de réalisation particulier, chaque mâchoire comprend au moins autant d'évidements qu'il y a de paires de dents, chaque évidement étant configuré pour être apte à recevoir une dent, chaque mâchoire comprenant en outre des moyens de blocage configurés pour bloquer chaque dent dans l'évidement dans lequel elle est reçue, et les deux mâchoires étant configurées pour être rendues solidaires l'une de l'autre de manière à mettre en contact les dents et la culasse. Il peut toutefois avoir un nombre d'évidements différent du nombre de paires de dents, sans s'éloigner du cadre de la présente invention.

L'utilisation de mâchoires configurées pour recevoir les dents permet notamment une conception modulaire des ensembles stator. On comprendra que de tels moyens de solidarisation permettent, par exemple, un démontage facile des ensembles stator si les mâchoires sont rendues solidaires par un moyens démontable, par exemple par vissage. On comprendra cependant que les mâchoires peuvent être rendues solidaires par d'autres solutions techniques, comme par exemple par collage, par soudage, par frettage, ou à l'aide d'un élément de sangle, par exemple métallique. Selon un mode de réalisation, les moyens de blocage comprennent au moins un coin configuré pour être disposé dans un évidement et être apte à être déplacé dans ledit évidement, le long de la dent reçue dans ledit évidement, afin de bloquer ladite dent dans ledit évidement.

L'utilisation de coins pour les moyens de blocage permet de bloquer facilement et avec précision les dents dans les évidements des mâchoires, sans déformation des dents. Les performances magnétiques de la machine sont ainsi optimisées, et les dents sont également facilement démontables.

On comprendra qu'en variante les moyens de blocage peuvent aussi comprendre des ressorts appliquant une pression sur les dents, ou bien encore que les dents peuvent être collées ou soudées dans les évidements.

En variante, les mâchoires assemblées qui exercent une pression peuvent permettre de mettre en contact les dents sur la culasse sans besoin de coins de blocage. La seule force de pression des mâchoires serait suffisante pour bloquer tout mouvement indésirable des dents par rapport à la culasse, résultant en un nombre d'évidements différent du nombre de paires de dents, comme indiqué plus haut.

Selon un mode de réalisation, les dimensions d'au moins l'un des évidements recevant une dent sont choisies pour permettre un réglage de la position de la dent reçue dans ledit au moins un évidement le long de la culasse dudit au moins un ensemble stator, selon la direction de déplacement, par insertion d'une cale dans ledit au moins un évidement, par exemple pour réduire les forces de détente de la machine.

L'utilisation, pour les évidements, de dimensions, selon la direction de déplacement, supérieures à celles nécessaires pour recevoir et bloquer les dents dans les évidements permet, lors d'un montage des ensembles stator, d'introduire une ou plusieurs cales dans les évidements afin d'ajuster précisément la position de certaines dents le long de la culasse. Cela peut être intéressant pour rattraper des jeux de fabrication ou pour introduire un léger décalage ou une dissymétrie magnétique permettant de réduire les forces de détente de la machine.

Selon un mode de réalisation, au moins l'un des évidements recevant une dent est prolongé par au moins un perçage traversant configuré pour recevoir une vis apte à appliquer une pression sur la dent reçue dans ledit évidement, de manière à améliorer un contact entre ladite dent et ladite culasse.

L'utilisation de vis configurées pour appliquer une pression sur les dents vers la culasse permet d'améliorer le contact et de réduire de potentiels entrefers parasites entre les dents et la culasse. Des vis peuvent être utilisées pour appliquer une pression sur les dents vers les faces latérales de contact de la culasse, ou encore, lorsque les extrémités de tête des dents ont une forme appropriée, par exemple en « T », vers une surface supérieure de la culasse.

Selon un mode de réalisation, pour au moins un ensemble stator, les moyens de fixation comprennent au moins une plateforme, chaque plateforme étant fixée à la fois au bâti et à l'au moins un ensemble stator.

L'utilisation de plateformes permet de positionner précisément les ensembles stator par rapport au bâti, tout en permettant un démontage facile des ensembles stator du bâti. De préférence, les plateformes sont configurées pour être disposées entre les ensembles stator et l'ensemble secondaire, de telle sorte que les ensembles stator sont « supportés » par les plateformes. Cependant, en variante, les plateformes peuvent être configurées pour que les ensembles stator soient disposés entre les plateformes et l'ensemble secondaire, de telle sorte que les ensembles stator sont « suspendus » aux plateformes.

Selon un mode de réalisation, l'au moins un ensemble stator comprend en outre au moins l'un parmi des vis de réglage d'entrefer configurées pour permettre une modification d'un espacement entre l'au moins une plateforme et l'au moins une mâchoire, et des cales d'entrefer disposées entre l'au moins une plateforme et l'au moins une mâchoire, de manière à permettre un réglage de l'entrefer entre les dents dudit au moins un ensemble stator et les sous-parties d'interaction en regard, grâce à au moins l'un parmi un changement du nombre de cales d'entrefer et un changement de l'épaisseur des cales d'entrefer.

On comprendra que les vis de réglage d'entrefer et les cales d'entrefer permettent de faire varier avec précision un espacement entre les ensembles stator et les plateformes, et donc de faire varier l'entrefer entre les dents des ensembles stator et la partie d'interaction. Il est ainsi possible d'ajuster avec précision l'entrefer entre chaque ensemble stator et la partie d'interaction, pour par exemple rattraper des jeux de fabrication. Un tel ajustement permet par exemple d'avoir des entrefers égaux pour tous les ensembles stator et ainsi de supprimer des efforts parasites qui s'appliquent sur les moyens de guidage en translation, qui sont générés lorsque les entrefers ne sont pas homogènes.

Selon un mode de réalisation, la partie d'interaction de l'ensemble secondaire comprend une pluralité de tôles qui sont empilées selon la direction de déplacement et sont assemblées entre elles, et des supports qui s'étendent selon la direction de déplacement, au moins certaines tôles comprenant des protubérances, et les supports étant configurés pour venir en prise avec les protubérances afin d'assurer la tenue mécanique de l'ensemble secondaire.

Le mode de réalisation ci-dessus propose une configuration fonctionnelle pour l'ensemble secondaire qui permet d'utiliser des tôles. L'utilisation de tôles empilées selon la direction de déplacement pour réaliser la partie d'interaction permet d'améliorer la circulation des flux magnétiques, dans la partie d'interaction, vers les dents des ensembles stator, et donc d'améliorer les performances magnétiques de la machine.

Selon un mode de réalisation, au moins une cavité, s'étendant suivant la direction de déplacement, est formée dans la partie centrale de la partie d'interaction de l'ensemble secondaire, de manière à limiter un court-circuit magnétique dans la partie d'interaction.

La disposition d'une ou plusieurs cavités au centre de la partie d'interaction permet de limiter les courts-circuits magnétiques au sein de la partie d'interaction et donc d'améliorer les performances magnétiques de la machine.

Selon un mode de réalisation, les sous-parties d'interaction comprennent des saillies en un matériau apte à être attiré par un champ magnétique, faisant saillie vers des dents de l'ensemble primaire situées en regard.

L'utilisation de sous-parties d'interaction comprenant des saillies permet de réaliser des interactions magnétiques contrôlées entre la partie d'interaction et les dents des ensembles stator, notamment lorsque la partie d'interaction ne comprend pas d'aimants, ce qui permet par exemple d'économiser des terres rares. Les saillies peuvent également permettre de guider les flux magnétiques dans l'entrefer.

Selon un mode de réalisation, des aimants sont disposés entre des sous-parties d'interaction de la partie d'interaction de l'ensemble secondaire, et les sous-parties d'interaction sont des masses polaires, en matériau magnétisable, magnétisées par des aimants disposés entre chaque masse polaire.

La disposition d'aimants dans la partie d'interaction, entre les sous-parties d'interaction, permet de magnétiser les sous-parties d'interactions afin de former des masses polaires nord et sud réparties de manière alternée dans la partie d'interaction, afin par exemple d'améliorer les interactions magnétiques entre la partie d'interaction et les ensembles stator et donc les performances de la machine. On comprendra que les sous-parties d'interaction peuvent aussi comprendre des saillies.

Selon un mode de réalisation, au moins un ensemble stator comprend en outre une dent supplémentaire disposée en contact avec une face latérale de contact de la culasse dudit au moins un ensemble stator, ledit au moins un ensemble stator étant configuré de telle sorte que ladite dent supplémentaire permet de casser une symétrie magnétique dudit au moins un ensemble stator, par exemple pour réduire les forces de détente de la machine.

L'utilisation d'une dent supplémentaire, pour au moins l'un des ensembles stator, permet de casser la symétrie magnétique et de faire disparaître des positions « préférées » de l'ensemble secondaire lorsque les bobines ne sont pas alimentées, de telle sorte que les forces de détente de la machine sont réduites.

Selon un mode de réalisation, au moins un ensemble stator est fixé au bâti à l'aide des moyens de fixation de manière à pouvoir être déplacé, lors d'une phase de réglage de la machine, par coulissement dans la direction de déplacement afin de permettre un ajustement de sa position, par exemple pour réduire des forces de détente de la machine.

Un réglage par déplacement d'un ensemble stator par coulissement selon la direction de déplacement permet par exemple un rattrapage de jeux de fabrication, ou l'introduction d'une petite dissymétrie magnétique de manière à réduire les forces de détente de la machine.

Selon un mode de réalisation, au moins une dent comprend une pluralité de tôles planes, empilées selon une direction d'empilement parallèle à la direction de déplacement.

L'utilisation de tôles empilées pour réaliser les dents permet d'améliorer la circulation des flux magnétiques, dans les dents, selon des directions perpendiculaires à la direction d'empilement des tôles, c'est-à-dire vers la culasse ou vers la partie d'interaction, et une réduction des pertes fer. Par ailleurs, l'utilisation d'un seul profil de tôle pour toutes les dents permet de réduire les coûts de fabrication de la machine.

Selon un mode de réalisation, au moins une culasse comprend une pluralité de tôles empilées selon une direction d'empilement perpendiculaire à un premier axe, parallèle à la direction de déplacement et passant par le centre de la partie d'interaction de l'ensemble secondaire, et à un second axe, qui correspond à l'axe parallèle à la direction de déplacement et passant par le centre de ladite au moins une culasse.

Pour les culasses, l'utilisation de tôles empilées selon une direction perpendiculaire à une direction allant, pour chaque paire de dents, de la première dent à la seconde dent, permet d'améliorer la circulation des flux magnétiques dans la culasse, et une réduction des pertes fer. Par ailleurs, l'utilisation d'un seul profil de tôle pour toutes les culasses permet de réduire les coûts de fabrication de la machine.

Selon un mode de réalisation, au moins l'une parmi une dent et une culasse se présente sous la forme d'une pièce formée à partir de poudre magnétique.

L'utilisation de pièces réalisées à partir de poudre magnétique permet une plus grande liberté pour les formes des dents et des culasses, par exemple pour former un épanouissement à l'extrémité de base des dents ou pour la forme de l'extrémité de tête des dents, cependant la circulation des flux magnétiques dans les dents et les culasses est alors moins optimale, par exemple en raison de pertes fer, par rapport à l'utilisation de tôles empilées selon des directions perpendiculaires à des directions de circulation des flux magnétiques.

Selon un mode de réalisation, les moyens de guidage en translation comprennent au moins l'un parmi un patin à billes disposé entre l'ensemble primaire et l'ensemble secondaire, un patin à billes disposé entre le bâti et l'ensemble secondaire, et un élément de guidage d'arbre en translation, par exemple un palier linéaire lisse ou un palier linéaire à billes, disposé entre un arbre et le bâti.

De manière préférée, la machine comprend des patins à billes disposés entre chaque ensemble stator et l'ensemble secondaire, et des éléments de guidage en translation disposés entre chaque arbre et le bâti. On comprendra que les éléments de guidage en translation, par exemple des paliers linéaires lisses ou des paliers linéaires à billes, permettent un guidage en translation des arbres. Cependant, lorsque l'ensemble secondaire est de grande longueur, un fléchissement de l'ensemble secondaire, par exemple des arbres, peut se produire entre les éléments de guidage en translation. On comprendra ainsi que les patins à billes permettent de guider l'ensemble secondaire, mais permettent aussi de maintenir l'ensemble secondaire, ce qui permet d'éviter un fléchissement quelle que soit la longueur de l'ensemble secondaire. On comprendra qu'en variante les moyens de guidage en translation peuvent comprendre d'autres solutions techniques de guidage en translation connues de l'homme du métier, par exemple des patins à billes disposés entre la partie d'interaction et une partie du bâti, par exemple un carter. On comprendra aussi que la machine peut comprendre uniquement des patins à billes ou uniquement des éléments de guidage en translation.

Selon un mode de réalisation, la machine électrique à mouvement linéaire comprend en outre un carter configuré pour contenir, à tout instant d'une utilisation, au moins l'ensemble primaire et la partie d'interaction de l'ensemble secondaire.

On comprendra qu'un carter permet par exemple de protéger la machine d'éléments extérieurs, comme de la poussière ou des écoulements de fluides, et permet également de protéger les utilisateurs.

Selon un mode de réalisation, les décalages entre les dents, selon la direction de déplacement, respectent les conditions suivantes pour une alimentation polyphasée constituée de m phases dont les phases successives sont notées Aᵢ avec i un entier compris entre 1 et m, pour chaque paire de dents les bobines étant alimentées à partir de l'une des phases Aᵢ et l'une de la première dent et de la seconde dent étant notée Aᵢ+ et l'autre de la première dent et de la seconde dent étant notée Aᵢ- ; Aᵢ-ayant, par rapport à Aᵢ+, l'un parmi un sens opposé d'enroulement de sa bobine, un sens opposé de circulation de courant dans sa bobine, et une alimentation de sa bobine avec un courant opposé ; le pas polaire étant noté p : pour chaque couple h donné, composé d'une dent Aᵢ+ et d'une dent A_{i+z}+, d'une autre paire de dents, il existe un entier relatif kₕ, et la dent Aᵢ+ est décalée de kₕ x p + (z/m) x p selon la direction de déplacement par rapport à la dent A_{i+z}+, avec m un entier supérieur ou égal à 2, et pour i un entier compris entre 1 et m-1 et z un entier compris entre 1 et m-i ; et pour chaque paire de dents donnée comprenant une dent Aᵢ+ et une dent Aᵢ-, un décalage entre Aᵢ+ et A;- selon la direction de déplacement est égal à εₚ × (p/2), avec εₚ égal à 1 ou -1 en fonction de la paire donnée.

Les règles de périodicité proposées ci-dessus permettent une répartition des dents le long des culasses qui permet d'obtenir des ensembles stator compacts et une machine électrique avec un pas polaire faible. Cependant, on comprendra que d'autres répartitions des dents le long des culasses sont possibles pour obtenir des ensembles stator fonctionnels.

Une machine électrique à mouvement linéaire selon la présente invention va maintenant être décrite à titre d'exemple non limitatif, avec référence aux dessins annexés.

Sur ces dessins :
[Fig. 1] est une vue en perspective d'une machine électrique à mouvement linéaire selon un mode de réalisation de la présente invention, le module électrique est représenté de manière schématique et deux côtés du carter ne sont pas représentés pour permettre de visualiser les éléments situés à l'intérieur.
[Fig. 2] est une vue en perspective de l'ensemble secondaire de la Figure 1.
[Fig. 3] est une vue en perspective agrandie d'une extrémité de l'ensemble secondaire de la Figure 1, l'élément de fixation de l'arbre de cette extrémité et les supports d'un côté ne sont pas représentés pour faciliter la visualisation.
[Fig. 4] est une vue en perspective d'un ensemble stator de la Figure 1.
[Fig. 5] est une vue en perspective éclatée d'un ensemble stator de la Figure 1, seules les premières dents des paires de dents sont visibles et les moyens de fixation ne sont pas représentés.
[Fig. 6] est une vue en perspective agrandie d'une extrémité de la culasse et de certaines dents d'un ensemble stator de la Figure 1.
[Fig. 7] est une vue en perspective agrandie de la machine de la Figure 1, les deux côtés du carter non représentés sur la Figure 1 sont ici représentés.
[Fig. 8] est une vue en perspective éclatée d'un ensemble stator selon une variante du mode de réalisation de la Figure 1, cet ensemble stator comprend une dent supplémentaire.
[Fig. 9] est une vue de dessus de la partie d'interaction de l'ensemble secondaire, et de la culasse et des dents d'un ensemble stator de la Figure 1 illustrant la répartition des dents le long de la culasse et l'espacement entre les dents en fonction de la structure de la partie d'interaction, les bobines ne sont pas représentées pour faciliter la visualisation.
[Fig. 10] est une vue en perspective de la culasse et des dents d'un ensemble stator selon une variante du mode de réalisation de la Figure 1.

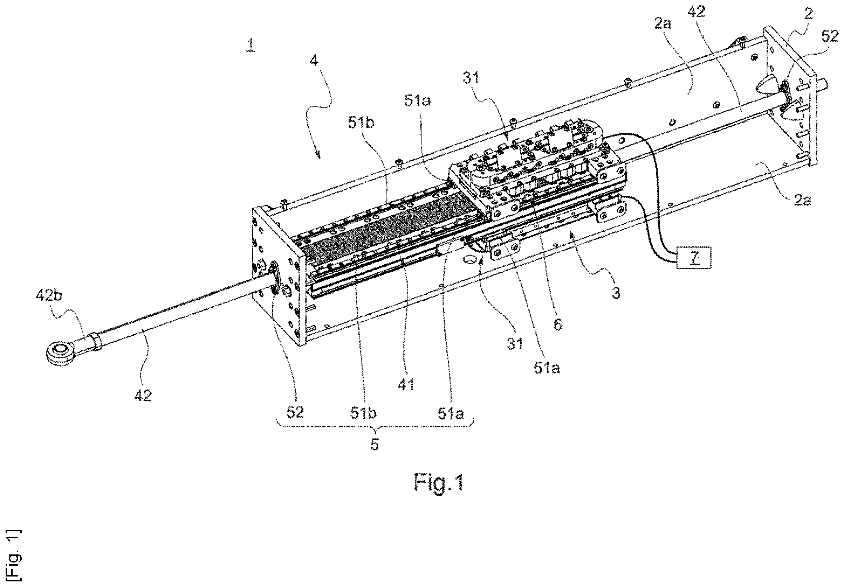

Si l'on se réfère tout d'abord à la Figure 1, on peut voir que l'on y a représenté une machine électrique à mouvement linéaire 1 selon un mode de réalisation de la présente invention. La machine 1 comprend un ensemble primaire 3 configuré pour être fixé à un bâti 2, un ensemble secondaire 4 s'étendant selon une direction dite de déplacement, et des moyens de guidage en translation 5 configurés pour guider un mouvement relatif en translation de l'ensemble secondaire 4 par rapport à l'ensemble primaire 3 selon la direction de déplacement.

La machine 1 illustrée en Figure 1 est configurée pour fonctionner en mode moteur, dans lequel une énergie électrique est transformée en énergie mécanique de type mouvement linéaire relatif de l'ensemble secondaire 4 par rapport à l'ensemble primaire 3 selon la direction de déplacement, et en mode générateur, dans lequel une énergie mécanique de type mouvement linéaire relatif de l'ensemble secondaire 4 par rapport à l'ensemble primaire 3 selon la direction de déplacement est transformée en énergie électrique. On comprendra cependant qu'en variante la machine 1 peut être configurée pour fonctionner uniquement en mode moteur ou uniquement en mode générateur.

On comprendra aussi que, lors d'un mouvement linéaire relatif de l'ensemble secondaire 4 par rapport à l'ensemble primaire 3, l'ensemble primaire 3 peut être fixe et l'ensemble secondaire 4 mobile, ou l'ensemble primaire 3 peut être mobile et l'ensemble secondaire 4 fixe, ou l'ensemble primaire 3 et l'ensemble secondaire 4 peuvent tous deux être mobiles avec un mouvement relatif de l'ensemble secondaire 4 par rapport à l'ensemble primaire 3.

Selon le mode de réalisation représenté sur la Figure 1, l'ensemble primaire 3 comprend deux ensembles stator 31. Les deux ensembles stator 31 sont disposés de manière opposée, et chaque ensemble stator 31 est configuré pour être fixé au bâti 2. On comprendra donc que l'ensemble primaire 3 est mobile lorsque le bâti 2 est mobile, et que l'ensemble primaire 3 est fixe lorsque le bâti 2 est fixe. On comprendra aussi que le nombre d'ensembles stator 31 peut être différent, comme cela sera évoqué plus tard.

Selon le mode de réalisation représenté sur la Figure 1, l'ensemble secondaire 4 comprend une partie d'interaction 41 et deux arbres 42. Chaque arbre 42 est solidaire de la partie d'interaction 41 et s'étend selon la direction de déplacement. Selon le mode de réalisation représenté sur la Figure 1, chaque arbre 42 est fixé à une extrémité, suivant la direction de déplacement, de la partie d'interaction 41 à l'aide d'un élément de fixation d'arbre 43. Chaque élément de fixation d'arbre 43 a une forme généralement parallélépipédique et comprend un trou traversant central 43a formé selon la direction de déplacement. Le trou traversant central 43a comprend une première portion dont un diamètre est sensiblement égal à un diamètre d'une première extrémité 42a d'un arbre 42, et une seconde portion dont un diamètre est inférieur à celui de la première portion, de telle sorte que la première extrémité 42a de l'arbre 42 peut être reçue dans la première portion du trou traversant 43a et qu'une vis configurée pour s'engager avec la première extrémité 42a peut être reçue dans la seconde portion du trou traversant 43a, de manière à fixer la première extrémité 42a de l'arbre 42 à l'élément de fixation d'arbre 43. On comprendra qu'en variante la première extrémité 42a de l'arbre 42 peut être fixée à l'élément de fixation d'arbre 43 d'une autre manière, par exemple par d'autres configurations de vissage, par soudage, par frettage ou par collage.

Chaque élément de fixation 43 comprend également deux trous traversants latéraux 43b formés en correspondance de deux trous traversants latéraux 41a formés dans la partie d'interaction 41, et en correspondance des trous traversants latéraux 43b de l'autre élément de fixation d'arbre 43, de telle sorte que deux tiges traversantes 43c peuvent être enfilées respectivement dans un trou traversant latéral 43b d'un élément de fixation d'arbre 43, dans un trou traversant latéral 41a de la partie d'interaction 41, et dans un trou traversant latéral 43b de l'autre élément de fixation d'arbre 43, afin de fixer les éléments de fixation d'arbre 43 à la partie d'interaction 41. On comprendra qu'en variante les éléments de fixation d'arbre 43 peuvent être fixés à la partie d'interaction 41 d'une autre manière, par exemple par d'autres configurations de vissage, par soudage, par frettage ou par collage. On comprendra aussi que les arbres 42 peuvent être directement fixés à la partie d'interaction 41, par exemple par soudage ou par collage. Selon le mode de réalisation représenté sur la Figure 1, chaque arbre 42 est configuré pour être relié, à une seconde extrémité 42b, à un élément extérieur à la machine 1, par exemple un ancrage fixe ou un élément extérieur à déplacer. On comprendra également qu'en variante la machine 1 peut comprendre un seul arbre 42.

Comme représenté sur la Figure 1, le bâti 2 comprend, de préférence, des tôles qui forment un carter 2a configuré pour contenir, à tout instant d'une utilisation, l'ensemble primaire 3 et la partie d'interaction 41 de l'ensemble secondaire 4. Cependant, on comprendra que le bâti pourrait être une simple structure, en tubes ou en barres, apte à positionner l'ensemble primaire 3 par rapport à l'ensemble secondaire 4.

Selon le mode de réalisation représenté sur la Figure 1, la partie d'interaction 41 est généralement parallélépipédique et la section transversale de la partie d'interaction 41 selon un plan perpendiculaire à la direction de déplacement est rectangulaire. La partie d'interaction 41 est configurée pour être disposée entre les deux ensembles stator 31 opposés, de telle sorte que deux côtés du rectangle de la section transversale sont orientés vers les ensembles stator 31 de l'ensemble primaire 3, de préférence les deux grands côtés du rectangle afin de maximiser les zones d'interaction.

Une pluralité de sous-parties d'interaction 411 sont réparties selon la direction de déplacement au sein de la partie d'interaction 41.

Les sous-parties d'interaction 411 sont réparties au sein de la partie d'interaction 41 de telle sorte qu'en utilisation chaque ensemble stator 31 de l'ensemble primaire 3 est disposé en regard de sous-parties d'interaction 411 de la partie d'interaction 41, de manière à permettre des interactions magnétiques entre les sous-parties d'interactions 411 et les ensembles stator 31.

On comprendra que la formulation « en regard » couvre également les variantes pour lesquelles, en positions de fin de course extrêmes d'un mouvement relatif de l'ensemble secondaire 4 par rapport à l'ensemble primaire 3, une portion d'au moins l'un des ensembles stator 31 n'est plus directement en regard de la partie d'interaction 41, c'est-à-dire une position extrême dans laquelle une portion dudit au moins un ensemble stator 31 n'est pas apte à interagir magnétiquement avec la partie d'interaction 41.

On comprendra aussi qu'en variante du mode de réalisation représenté sur la Figure 1, l'ensemble primaire 3 peut comprendre un seul ensemble stator 31 ou un nombre d'ensembles stator 31 supérieur à deux. On comprendra également que la forme de la partie d'interaction 41 de l'ensemble secondaire 4 dépend directement du nombre d'ensembles stator 31 et de leur disposition, de manière à présenter des sous-parties d'interaction 411 en regard de chaque ensemble stator 31.

On comprendra que, selon des variantes, la section transversale de la partie d'interaction 41 peut être tout polygone régulier, par exemple un hexagone, et l'ensemble primaire 3 peut comprendre autant d'ensembles stator 31 que le polygone régulier a de côtés, par exemple six, la machine 1 étant configurée de telle sorte que chaque ensemble stator 31 est disposé en face d'un côté du polygone régulier correspondant à la section transversale de la partie d'interaction 41.

Par ailleurs, la configuration des ensembles stator 31 et de la partie d'interaction 41 pourrait, en variante, encore être différente.

Selon une variante, l'ensemble primaire 3 pourrait comprendre de un à quatre ensembles stator 31, la section transversale de la partie d'interaction 41 pourrait être carrée, et la partie d'interaction 41 pourrait être configurée de telle sorte qu'un coin du carré soit orienté vers chaque ensemble stator 31.

On comprendra aussi que, de préférence, la forme des ensembles stator 31 est adaptée pour correspondre à la configuration de la partie d'interaction 41. Les ensembles stator 31 pourraient par exemple avoir une forme de cornière et une section transversale en « V », de telle sorte que l'ouverture du « V » soit orientée vers un coin du carré de la section transversale de la partie d'interaction 41.

Selon une autre variante, la section transversale de la partie d'interaction 41 pourrait être un sablier, et la partie d'interaction 41 orientée de telle sorte qu'un côté en « V » du sablier soit orienté vers chaque ensemble stator 31, et la section transversale des ensembles stator 31 pourrait avoir la forme d'un triangle qui correspond au côté en « V » du sablier.

Selon une variante encore, la section transversale de la partie d'interaction 41 pourrait comprendre d'autres formes concaves et la section transversale des ensembles stator 31 d'autres formes convexes correspondantes, ou inversement. La partie d'interaction 41 pourrait par exemple être cylindrique. Enfin, l'homme du métier comprendra que des combinaisons des variantes évoquées ci-dessus sont possibles. Selon le mode de réalisation représenté sur les Figures 1 à 3, les moyens de guidage en translation 5 comprennent des patins à billes 51a, des rails 51b et des éléments de guidage d'arbre en translation 52, la machine 1 comprenant quatre patins à billes 51a et deux rails 51b pour chaque ensemble stator 31, et un élément de guidage d'arbre en translation 52 pour chaque arbre 42. On comprendra qu'un élément de guidage d'arbre en translation peut être un palier linéaire lisse (appelé également douille à bague lisse, ou palier coulissant) ou un palier linéaire à billes (appelé également douille à billes) ou tout autre élément de guidage.

Chaque rail 51b est disposé, latéralement et selon la direction de déplacement, sur une face de la partie d'interaction 41 orientée vers un ensemble stator 31 et chaque patin à billes 51a est fixé sur un ensemble stator 31 de manière à être disposé entre ledit ensemble stator 31 et la partie d'interaction 41. La fixation des patins à billes 51a et des rails 51b est de préférence effectuée par vissage mais pourrait également être réalisée par d'autres techniques de fixation, par exemple par collage ou par soudage.

Chaque patin à billes 51a coopère avec un rail 51b, de manière à permettre un mouvement relatif de l'ensemble secondaire 4 par rapport à l'ensemble primaire 3 en translation selon la direction de déplacement et de manière à bloquer tout autre mouvement. L'utilisation de patins à billes 51a et de rails 51b disposés entre les ensembles stator 31 et la partie d'interaction 41 présente notamment pour avantage de permettre de supporter la partie d'interaction 41, ce qui permet d'éviter un fléchissement de l'ensemble secondaire 4, par exemple lorsque l'ensemble secondaire 4 est de grande longueur, et permet donc l'utilisation d'un ensemble secondaire 4 plus long.

Chaque élément de guidage d'arbre en translation 52 est fixé au bâti 2 et s'engage avec un arbre 42 de manière à guider un déplacement relatif en translation dudit arbre 42 par rapport au bâti 2, ce guidage permet également de supporter la partie d'interaction 41 au niveau des arbres 42.

On comprendra qu'en variante, la machine 1 peut comprendre uniquement des patins à billes 51a et des rails 51b, ou uniquement des éléments de guidage d'arbre en translation 52. On comprendra également qu'un mouvement relatif de l'ensemble secondaire 4 par rapport à l'ensemble primaire 3 pourrait être guidé par d'autres moyens de guidage, par exemple des liaisons glissières fixées latéralement entre la partie d'interaction 41 et le bâti 2.

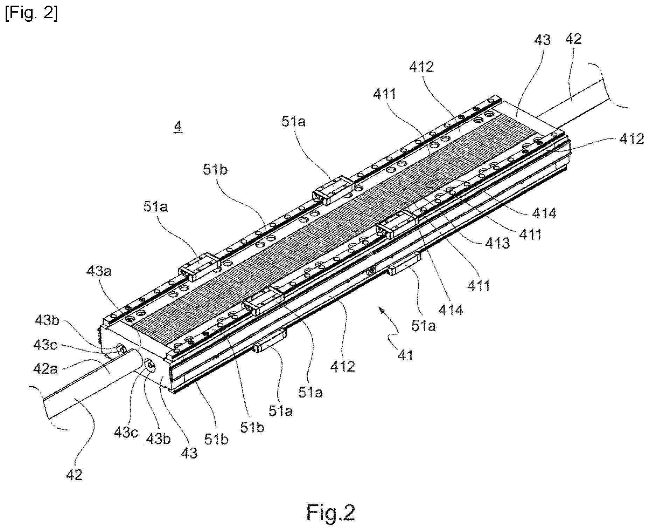

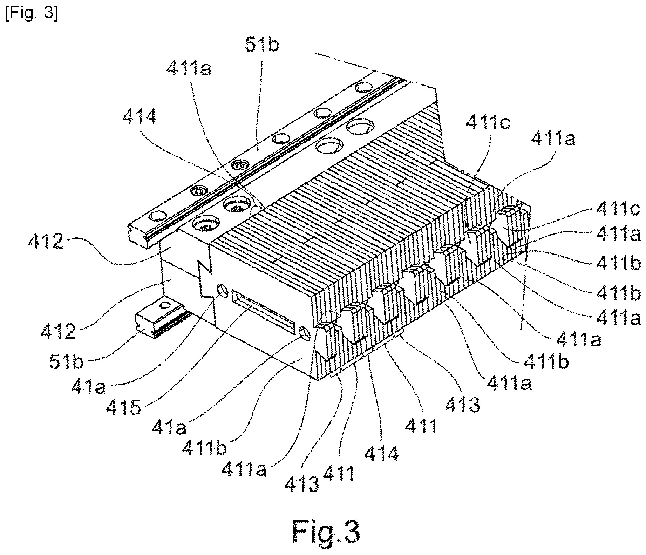

En se référant aux Figures 2 et 3, on va maintenant décrire plus en détail la structure de la partie d'interaction 41 de l'ensemble secondaire 4. La partie d'interaction 41 comprend des sous-parties d'interaction 411, des supports 412, des aimants 413, 414, et une cavité 415.

Selon le mode de réalisation représenté sur la Figure 3, les sous-parties d'interaction 411 comprennent des tôles rectangulaires 411a et des tôles dites tôles papillons 411b, empilées selon la direction de déplacement et assemblées entre elles, par exemple par collage ou par soudage. Les tôles rectangulaires 411a et les tôles papillons 411b sont réalisées en un matériau magnétisable, par exemple des alliages d'acier inoxydable magnétique tels que l'alliage Z30C13, d'alliages de type acier oxydable magnétique tels que l'alliage XC10, ou d'acier électrique pour machines électriques tel que les tôles en fer silicium. L'utilisation de tôle 411a, 411b pour réaliser les sous-parties d'interaction 411 permet de réduire les coûts de fabrication et d'améliorer la circulation du champ magnétique, notamment dans une direction allant des sous-parties d'interaction 411 vers l'ensemble stator 31 en regard. On comprendra cependant que les sous-parties d'interaction 411 peuvent également, en variante, être des pièces monolithiques, par exemple réalisées à partir de poudre magnétique.

Selon le mode de réalisation représenté sur la Figure 3, la partie d'interaction 41 comprend en outre des aimants 413, 414 polarisés selon la direction de déplacement, c'est-à-dire qu'un côté des aimants 413, 414 selon la direction de déplacement a une polarité opposée à celle d'un côté opposé selon la direction de déplacement. Selon le mode de réalisation représenté sur la Figure 3, les aimants 413, 414 sont des aimants permanents. On comprendra cependant que les aimants 413, 414 pourraient également être d'autres types d'aimants, par exemple des électroaimants ou des bobines supraconductrices, afin de pouvoir moduler le champ magnétique inducteur créé par la partie d'interaction 41, ou afin de substituer les aimants permanents contenant des terres rares. Les aimants 413, 414 sont répartis en un premier ensemble d'aimants dits nord-sud 413 et un second ensemble d'aimants dits sud-nord 414, les polarités des aimants nord-sud 413 étant inversées par rapport aux polarités des aimants sud-nord 414.

Selon le mode de réalisation représenté sur la Figure 3, la partie d'interaction 41 est formée par un assemblage successif de sous-parties d'interaction 411, d'aimants nord-sud 413 et d'aimants sud-nord 414.

Des aimants nord-sud 413 et des aimants sud-nord 414 sont interposés de manière alternée entre les sous-parties d'interaction 411, de telle sorte qu'une sous-partie d'interaction 411 donnée est soit en contact avec des côtés sud des aimants 413, 414, soit en contact avec des côtés nord des aimants 413, 414.

Ainsi sont formées de manière alternée des masses polaires nord, c'est-à-dire des sous-parties d'interaction 411 en contact avec des côtés nord des aimants nord-sud 413 et des aimants sud-nord 414, et des masses polaires sud, c'est-à-dire des sous-parties d'interaction 411 en contact avec des côtés sud des aimants nord-sud 413 et des aimants sud-nord 414. L'utilisation de masses polaires entre les aimants 413, 414 permet notamment, de guider le champ magnétique pour limiter les fuites de champ magnétique entre deux aimants consécutifs, d'augmenter l'induction de l'entrefer, et de diminuer un effet de démagnétisation des aimants 413, 414 sous l'effet de courants importants dans les ensembles stator 31.

De préférence, toutes les sous-parties d'interaction 411 ont une même épaisseur selon la direction de déplacement, et tous les aimants 413, 414 ont une même épaisseur selon la direction de déplacement.

Selon une variante non représentée, les sous-parties d'interaction 411 peuvent comprendre des saillies faisant saillie vers l'ensemble stator 31 en regard. Comme cela sera détaillé plus tard, lorsque les sous-parties d'interaction 411 comprennent des saillies, la partie d'interaction 41 peut être exempte d'aimants 413, 414. La partie d'interaction 41 est alors formée d'une succession de sous-parties d'interaction 411 en saillie, espacées selon la direction de déplacement.

Selon le mode de réalisation représenté sur la Figure 3, une cavité 415, s'étendant suivant la direction de déplacement, est en outre formée dans la partie centrale de la partie d'interaction 41. Cette cavité 415 permet notamment d'éviter un court-circuit magnétique dans la partie d'interaction 41 entre des aimants nord-sud 413 et sud-nord 414 adjacents, en empêchant le flux magnétique de reboucler à l'intérieur de la partie d'interaction 41, ce qui limite ainsi les fuites de champ magnétique. Selon le mode de réalisation représenté sur la Figure 3, chaque tôle papillon 411b s'étend de part et d'autre de la cavité 415 et comprend un trou traversant central selon la direction de déplacement, et les dimensions des tôles rectangulaires 411a et des aimants 413, 414 sont choisies de telle sorte que des tôles rectangulaires 411a et des aimants 413, 414 peuvent être disposés de part et d'autre de la cavité 415 de manière à définir celle-ci. On comprendra qu'en variante les tôles rectangulaires 411b et les aimants 413, 414 pourraient aussi s'étendre de part et d'autre de la cavité 415 et comprendre un trou traversant central. En variante toujours, la partie d'interaction 41 pourrait aussi comprendre une pluralité de cavités successives réparties selon la direction de déplacement.

Les tôles papillons 411b comprennent des protubérances 411c, qui s'étendent latéralement à l'opposé des ensembles stator 31. La partie d'interaction 41 comprend deux paires de supports 412 qui s'étendent latéralement le long des sous-parties d'interactions 411 selon la direction de déplacement. Chaque paire de supports 412 est configurée pour venir en prise avec les protubérances 411c des tôles papillons 411b et prendre en sandwich les protubérances 411c. Les supports 412 de chaque paire de supports 412 sont également configurés pour être solidarisés entre eux, par exemple par vissage, par collage ou par soudage, de manière à maintenir les protubérances 411c et améliorer la tenue mécanique de la partie d'interaction 41. De préférence, les éléments de fixation d'arbre 43 sont configurés pour empêcher un coulissement des supports 412 selon la direction de déplacement.

On comprendra aussi que les trous traversants latéraux 41a de la partie d'interaction 41 sont formés dans les sous-parties d'interaction 411, de telle sorte que les tiges traversantes 43c passant par les trous traversants latéraux 41a participent également à la tenue mécanique des sous-parties d'interaction 411 et de la partie d'interaction 41.

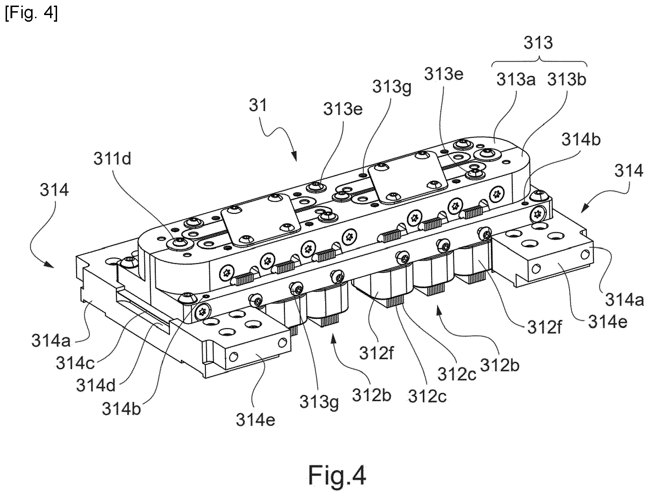

En se référant aux Figures 4 à 6, on va maintenant décrire plus en détail la structure d'un ensemble stator 31 de la machine de la Figure 1.

Selon le mode de réalisation représenté sur les Figures 4 à 6, un ensemble stator 31 comprend une culasse 311, six paires 312 de dents 312a, 312b, des moyens de solidarisation 313, et des moyens de fixation 314.

La machine 1 représentée sur la Figure 1 est une machine triphasée. On comprendra que la machine 1 peut comprendre un nombre de paires 312 de dents 312a, 312b différent de six, notamment en fonction du nombre de phases de l'alimentation alternative polyphasée utilisée. Le nombre de paires 312 de dents 312a, 312b est de préférence un multiple du nombre de phases de l'alimentation alternative polyphasée. Le nombre de paires 312 de dents 312a, 312b minimal est de deux paires 312 pour permettre un fonctionnement de la machine 1 en mode moteur, et est d'une paire 312 pour permettre un fonctionnement de la machine 1 en mode générateur.

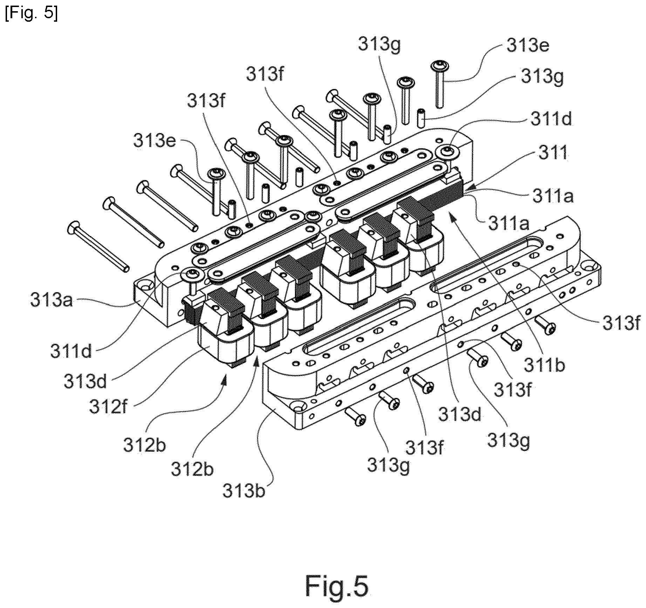

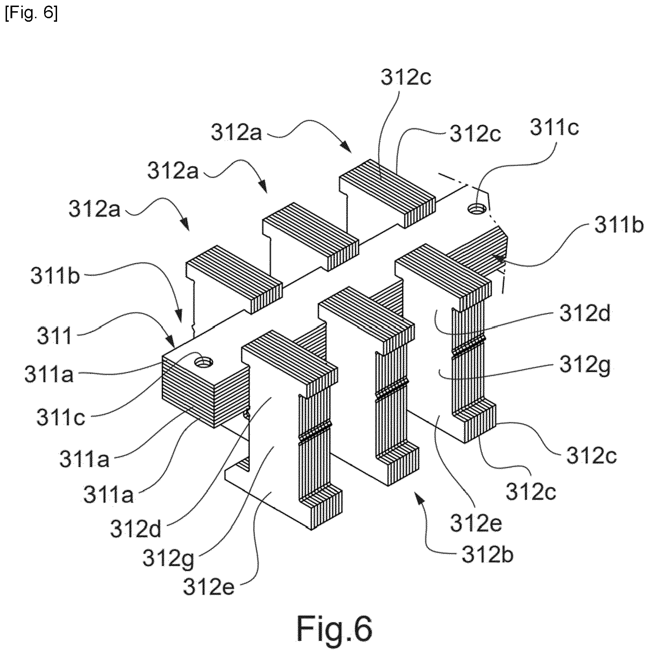

Selon le mode de réalisation représenté sur les Figures 5 et 6, chaque culasse 311 comprend une pluralité de tôles 311a assemblées entre elles et empilées selon une direction d'empilement perpendiculaire à un premier axe, parallèle à la direction de déplacement et passant par le centre de la partie d'interaction 41 de l'ensemble secondaire 4, et à un second axe, parallèle à la direction de déplacement et passant par le centre de la culasse 311.

On comprendra que, de préférence, toutes les tôles 311a des culasses 311 sont identiques, afin notamment de faciliter la fabrication et de réduire les coûts de production.

Sur les Figures 5 et 6, les tôles 311a sont planes, on comprendra cependant que dans le cas d'autres configurations de partie d'interaction 41 et d'ensembles stator 31, par exemple celles décrites plus haut, les tôles 311a peuvent ne pas être planes. Les tôles 311a peuvent par exemple avoir la forme d'une cornière avec un profil en coupe transversale en forme de « V ».

Comme représenté sur les Figures 5 et 6, chaque dent 312a, 312b comprend une pluralité de tôles 312c assemblées entre elles et empilées selon une direction d'empilement parallèle à la direction de déplacement.

On comprendra que, de préférence, toutes les tôles 312c des dents 312a, 312b sont identiques, afin notamment de faciliter la fabrication et de réduire les coûts de production.

Les tôles 311a des culasses 311 et les tôles 312c des dents 312a, 312b sont réalisées en un matériau magnétisable, par exemple des tôles feuilletées pour machines électriques telles que des tôles en fer silicium ou en fer cobalt comme connues par l'Homme de métier

Pour chaque culasse 311 et pour chaque dent 312a, 312b, les tôles 311a, 312c sont assemblées entre elles, de préférence par collage. Cependant, on comprendra que d'autres solutions techniques sont possibles pour assembler les tôles 311a, 312c entre elles, par exemple un soudage, un rivetage, un frettage d'une tige traversant les tôles 311a, 312c selon leur direction d'empilement, ou un cerclage, par exemple à l'aide d'une sangle métallique.

La machine 1 est configurée pour favoriser, pour chaque paire 312 de dents 312a, 312b, un bouclage magnétique transversal entre la première dent 312a, la culasse 311 et la seconde dent 312b. L'utilisation de tôles 311a, 312c pour les culasses 311 et les dents 312a, 312b, permet d'améliorer la circulation d'un champ magnétique à travers les culasses 311 et les dents 312a, 312b. Par ailleurs, les directions d'empilement des tôles 311a des culasses 311 et des tôles 312c des dents 312a, 312b sont toujours perpendiculaires à la direction de circulation d'un champ magnétique dans les culasses 311 et les dents 312a, 312b, ce qui permet d'améliorer encore d'avantage la circulation d'un tel champ magnétique et de minimiser les pertes par courants de Foucault. On comprendra cependant qu'en variante chaque culasse 311 et chaque dent 312a, 312b pourrait être formée d'une seule pièce monolithique, par exemple réalisée à partir de poudre magnétique chauffée et pressée pour réaliser les culasses 311 et les dents 312a, 312b sous la forme souhaitée, voire réalisée par impression 3D.

Chaque culasse 311 comprend deux faces latérales de contact 311b définies de part et d'autre de l'axe parallèle à la direction de déplacement et passant par le centre de la culasse 311.

Chaque dent 312a, 312b comprend une extrémité de tête 312d qui est configurée pour venir en contact avec une face latérale de contact 311b d'une culasse 311, comme représenté sur la Figure 6, et une extrémité de base 312e, opposée à l'extrémité de tête 312d, qui est configurée pour être orientée vers la partie d'interaction 41 de l'ensemble secondaire 4, de telle sorte qu'un entrefer 6 est formé entre les dents 312a, 312b et les sous-parties d'interaction 411. Chaque dent 312a, 312b est configurée pour interagir magnétiquement avec des sous-parties d'interaction 411 de l'ensemble secondaire 4 en regard.

La machine 1 est configurée de telle sorte que lors d'un mouvement relatif de l'ensemble secondaire 4 par rapport à l'ensemble primaire 3, une sous-partie d'interaction 411 de l'ensemble secondaire 4 se déplace relativement parallèlement à la surface formée par les extrémités de base 312e des dents 312a, 312b de l'ensemble stator 31 qui est en regard.

Sur les Figures, les extrémités de base 312e des dents 312a, 312b et les sous-parties d'interaction 411 sont planes, de telle sorte que la structure est simple. Cependant, on comprendra qu'en variante les extrémités de base 312e des dents 312a, 312b pourraient comprendre des rainures s'étendant selon la direction de déplacement, et les sous-parties d'interaction 411 pourraient comprendre des protubérances de formes complémentaires s'étendant également selon la direction de déplacement, ou inversement. Cette structure est plus complexe mais permet d'augmenter les zones d'interaction entre les dents 312a, 312b et les sous-parties d'interaction 411.

Chaque ensemble stator 31 est configuré de telle sorte que les paires 312 de dents 312a, 312b sont espacées les unes des autres le long de la culasse 311 selon la direction de déplacement, et les dents 312a, 312b d'une paire 312 de dents 312a, 312b sont agencées en diagonale sur la culasse 311, de telle sorte que pour chaque paire 312 de dents 312a, 312b, une première dent 312a est en contact avec une face latérale de contact 311b de la culasse 311 et une seconde dent 312b est en contact avec une autre face latérale de contact 311b de la culasse 311. La machine 1 est en outre configurée de telle sorte que, pour chaque paire 312 de dents 312a, 312b, lorsque la première dent 312a se trouve directement en regard d'une sous-partie d'interaction 411, la seconde dent 312b se trouve directement en regard d'une autre sous-partie d'interaction 411. Lorsque la partie d'interaction 41 comprend des aimants 413, 414, la machine 1 est en outre configurée pour que ladite sous-partie d'interaction 411 directement en regard de la première dent 312a soit de polarité opposée à la sous-partie d'interaction 411 directement en regard de la seconde dent 312b. Cette organisation en diagonale permet notamment de réduire le pas polaire de la machine 1 et d'augmenter la compacité de la machine électrique 1.

Chaque ensemble stator 31 comprend en outre des moyens de solidarisation 313, qui sont configurés pour solidariser les dents 312a, 312b à la culasse 311. De préférence, les moyens de solidarisation 313 sont réalisés en un matériau non magnétisable, par exemple un alliage d'aluminium, un alliage de titane, un alliage d'acier inoxydable, ou encore du plastique, par exemple de l'ABS (acrylonitrile butadiène styrène) ou un PA (polyamide), et encapsulent les dents 312a, 312b et la culasse 311.

Selon l'invention, les moyens de solidarisation 313 sont configurés pour être aptes à solidariser les dents 312a, 312b à la culasse 311 sans déformation des dents 312a, 312b ou de la culasse 311 altérant la circulation d'un champ magnétique ou augmentant des pertes fer.

Selon le mode de réalisation représenté sur les Figures 4 et 5, les moyens de solidarisation 313 comprennent deux mâchoires 313a, 313b qui sont disposées de part et d'autre de la culasse 311, et qui sont configurées pour solidariser les dents 312a, 312b sur la culasse.

Selon le mode de réalisation représenté sur les Figures 4 et 5, chaque mâchoire 313a, 313b comprend une seule platine. Cependant, l'homme du métier comprendra que chaque mâchoire 313a, 313b pourrait, en variante, comprendre plusieurs platines solidarisées entre elles pour former ladite mâchoire 313a, 313b.

Pour chaque ensemble stator 31, une première mâchoire 313a est destinée à recevoir les premières dents 312a des paires 312 de dents 312a, 312b, et une seconde mâchoire 313b est destinée à recevoir les secondes dents 312b des paires 312 de dents 312a, 312b.

Sur le mode de réalisation non limitatif représenté, chaque mâchoire 313a, 313b comprend autant d'évidements 313c qu'il y a de paires 312 de dents 312a, 312b, et chaque évidement 313c est configuré pour être apte à recevoir une dent 312a, 312b. Selon une variante détaillée plus bas l'une des mâchoires 313a, 313b peut comprendre un évidement 313c supplémentaire. En variante, les mâchoires assemblées qui exercent une pression peuvent permettre de mettre en contact les dents sur la culasse sans utiliser de coins de blocage. La seule force de pression des mâchoires serait suffisante pour bloquer tout mouvement indésirable des dents par rapport à la culasse. Le nombre d'évidement est dans ce cas différent du nombre de paires de dents.

Chaque mâchoire 313a, 313b comprend en outre des moyens de blocage configurés pour bloquer chaque dent 312a, 312b dans l'évidement 313c dans lequel elle est reçue. Selon l'invention, les moyens de blocage sont configurés pour être aptes à bloquer les dents 312a, 312b dans les évidements 313c sans déformation des dents 312a, 312b altérant la circulation d'un champ magnétique ou augmentant des pertes fer.

Selon le mode de réalisation représenté sur la Figure 5, les moyens de blocage d'une mâchoire 313a, 313b comprennent, pour chaque évidement 313c, un coin 313d, et une vis 313e configurée pour traverser la mâchoire 313a, 313b et pour permettre un déplacement du coin 313d. De préférence, les coins 313d sont réalisés en un matériau non magnétisable, par exemple un alliage d'aluminium, un alliage de titane, un alliage d'acier inoxydable, ou du plastique.

Chaque évidement 313c comprend une paroi inclinée, et chaque coin 313d est configuré pour être disposé dans un évidement 313c en contact avec la paroi inclinée, de manière à être apte à être déplacé dans l'évidement 313c par la vis 313e associée, le long de la paroi inclinée et le long de la dent 312a, 312b reçue dans l'évidement, afin de bloquer ladite dent dans l'évidement 313c. Ces moyens de blocage permettent notamment de bloquer les dents 312a, 312b dans les évidements 313c sans déformation et sans endommagement.

Par ailleurs, les moyens de solidarisation 313 peuvent en outre être configurés pour permettre une réduction des forces de détente de la machine 1, ou un rattrapage de jeux de fabrication, en permettant un ajustement de la position des dents 312a, 312b le long des culasses 311.

Dans ce cas, les dimensions de chaque évidement 313c recevant une dent 312a, 312b sont choisies pour permettre un réglage de la position de la dent 312a, 312b, reçue dans l'évidement 313c, le long de la culasse 311, selon la direction de déplacement. Les moyens de blocage comprennent alors en outre des cales, et chaque cale est configurée pour être insérée dans un évidement 313c, à l'opposé à la fois de la paroi inclinée et du coin 313d. Ainsi, lorsque le coin 313d est déplacé par la vis 313e, le coin 313d vient presser et bloquer la dent 312a, 312b contre la cale. On comprendra donc qu'il est possible de modifier la position de la dent 312a, 312b le long de la culasse 311 en choisissant l'épaisseur de la cale.

On comprendra que les moyens de blocage comprenant des coins 313d permettent un démontage facile, par exemple pour remplacer un composant défectueux, pour modifier les bobines 312f ou pour recycler les composants en fin de vie de la machine 1. Cependant, en variante, les moyens de blocage pourraient prendre d'autres formes. Par exemple, les moyens de blocage pourraient comprendre une résine configurée pour bloquer les dents 312a, 312b dans les évidements 313c, ou des ressorts configurés pour appliquer une pression sur les dents 312a, 312b et permettre un blocage dans les évidements 313c. Par résine on entend notamment un produit polymère naturel, artificiel ou synthétique. En variante, les dents 312a, 312b pourraient aussi être collées ou soudées.

Par ailleurs, pour chaque ensemble stator 31, les deux mâchoires 313a, 313b sont configurées pour être rendues solidaires l'une de l'autre de manière à mettre les dents 312a, 312b en contact avec la culasse 311. De préférence, les mâchoires 313a, 313b sont solidarisées par vissage. On comprendra cependant que d'autres solutions techniques peuvent être utilisées, par exemple un collage, un soudage ou un cerclage à l'aide d'une sangle, par exemple en métal.

Selon le mode de réalisation représenté sur les Figures 4 et 5, chaque évidement 313c des mâchoires 313a, 313b est prolongé par deux perçages traversants 313f.

Un premier perçage traversant 313f s'étend selon la direction d'empilement des tôles 311a de la culasse 311, et un second perçage traversant 313f s'étend selon une direction perpendiculaire à la direction d'empilement des tôles 311a de la culasse 311 et perpendiculaire à la direction de déplacement. Les perçages 313f sont configurés pour recevoir des vis 313g configurées pour appliquer une pression sur les dents 312a, 312b vers la culasse 311, de manière à améliorer un contact entre les dents 312a, 312b et la culasse 311 et à limiter des entrefers parasites entre les dents 312a, 312b et la culasse 311, ce qui permet d'améliorer les performances générales de la machine 1.

On comprendra que les vis 313g configurées pour appliquer une pression sur les dents 312a, 312b selon la direction perpendiculaire à la direction d'empilement des tôles 311a de la culasse 311 et perpendiculaire à la direction de déplacement permettent d'améliorer le contact entre les dents 312a, 312b et les faces latérales de contact 311b des culasses 311.

On comprendra aussi que les vis 313g configurées pour appliquer une pression sur les dents 312a, 312b selon la direction d'empilement des tôles 311a de la culasse 311 trouvent leur utilité lorsque la forme de l'extrémité de tête 312d des dents 312a, 312b permet une mise en contact des dents 312a, 312b et de la culasse 311 selon la direction d'empilement des tôles 311a de la culasse 311, par exemple lorsque les extrémités de tête 312d des dents 312a, 312b ont une forme en « T », comme cela est représenté sur les Figures 5 et 6.

L'utilisation de dents 312a, 312b avec des extrémités de tête 312d en forme de « T » permet notamment de bloquer un déplacement des dents 312a, 312b selon la direction d'empilement des tôles 311a de la culasse 311, par exemple un déplacement lié aux interactions magnétiques entre les dents 312a, 312b et la partie d'interaction 41.

On comprendra également qu'en variante les évidements 313c pourraient comprendre un perçage traversant 313f selon une autre direction pour améliorer un contact entre les dents 312a, 312b et la culasse 311.

On comprendra aussi qu'en variante les vis 313g configurées pour appliquer une pression sur les dents 312a, 312b vers la culasse 311 peuvent être remplacées par d'autres moyens de sollicitation, par exemple des ressorts reçus dans les évidements 313c.

De préférence, chaque culasse 311 est également solidarisée aux mâchoires 313a, 313b. Par exemple, des trous 311c peuvent être formés dans la culasse 311 selon la direction d'empilement des tôles 311a, et des vis 311d peuvent être configurées pour traverser les mâchoires 313a, 313, et pour s'engager avec les trous 311c, de manière à solidariser la culasse 311 aux mâchoires 313a, 313b. On comprendra que les trous 311c peuvent directement comprendre un filetage ou qu'un écrou peut être fixé en correspondance des trous 311c pour permettre un engagement avec les vis 311d.

On comprendra que les moyens de solidarisation 313 comprenant des mâchoires 313a, 313b permettent un démontage facile, par exemple pour remplacer un composant défectueux, pour modifier les bobines 312f ou pour recycler les composants en fin de vie de la machine 1. Cependant, en variante du mode de réalisation représenté sur les Figures 4 et 5, les moyens de solidarisation 313 pourraient également prendre d'autres formes, et par exemple comprendre une résine configurée pour encapsuler les dents 312a, 312b sur la culasse 311. Par résine on entend notamment un produit polymère naturel, artificiel ou synthétique. En variante, les dents 312a, 312b pourraient aussi être collées ou soudées sur la culasse 311. En variante ou en complément, la culasse 311 pourrait comprendre une rainure, s'étendant par exemple selon la direction de déplacement, et les dents 312a, 312b pourraient comprendre des saillies configurées pour s'engager dans la rainure, ou inversement.

De préférence, pour tous les ensembles stator 31, toutes les dents 312a, 312b ont une même épaisseur selon la direction de déplacement, toutes les premières dents 312a en contact d'une face latérale de contact 311b sont espacées d'une même distance selon la direction de déplacement, et toutes les secondes dents 312b en contact d'une autre face latérale de contact 311b sont espacées de la même distance selon la direction de déplacement.

Comme illustré sur les Figures 4 et 5, chaque dent 312a, 312b des paires 312 de dents 312a, 312b est entourée d'une bobine 312f autour d'une section de corps 312g. Chaque bobine 312f peut par exemple comprendre un fil en cuivre, en aluminium ou en un matériau supraconducteur.

La machine 1 comprend en outre un module électrique 7, par exemple un onduleur en mode moteur ou un pont redresseur en mode générateur, relié aux bobines 312f.

Le module électrique 7 est configuré pour permettre une alimentation des bobines 312f en mode moteur et pour collecter des courants alternatifs provenant des bobines 312f en mode générateur. De préférence, l'alimentation est une alimentation alternative triphasée, on comprendra cependant qu'un nombre différent de phases peut être utilisé pour des variantes du mode de réalisation représenté sur les Figures. De préférence encore, les tensions d'alimentation ont un profil sinusoïdal. On comprendra cependant que les profils des tensions pourraient, en variante, être rectangles ou trapèzes par exemple.

Comme indiqué plus haut, de préférence le nombre de paires 312 de dents 312a, 312b est choisi en fonction du nombre de phases et chaque paire 312 de dents 312a, 312b est alimentée à partir de l'une des phases de l'alimentation alternative polyphasée.

Chaque bobine 312f d'une paire 312 de dents 312a, 312b est configurée de telle sorte que lorsqu'elle est alimentée en mode moteur, elle génère une polarité magnétique à l'extrémité de base 312e de la dent 312a, 312b qu'elle entoure et génère une polarité magnétique opposée à l'extrémité de tête 312d de la dent 312a, 312b qu'elle entoure, et les bobines 312f de chaque paire 312 de dents 312a, 312b sont configurées pour générer une polarité à l'extrémité de base 312e, respectivement à l'extrémité de tête 312d, de la première dent 312a et pour générer une polarité opposée à l'extrémité de base 312e, respectivement à l'extrémité de tête 312d, de la seconde dent 312b, de manière à créer un bouclage magnétique transversal entre ladite première dent 312a, la culasse 311 et ladite seconde dent 312b. On comprendra que la polarité opposée peut être obtenue soit avec un sens de bobinage opposé soit avec une alimentation avec un courant opposé.

L'alimentation des bobines 312f en mode moteur étant alternative et polyphasée, les polarités et les intensités des champs magnétiques générés par les bobines 312f varient au cours du temps en fonction des variations de l'alimentation alternative polyphasée.

En mode générateur, des interactions magnétiques entre les sous-parties d'interaction 411 de la partie d'interaction 1 de l'ensemble secondaire 4 et les extrémités de base 312e des dents 312a, 312b, lors d'un mouvement relatif de l'ensemble secondaire 4 par rapport à l'ensemble primaire 3, provoque la génération de courants alternatifs dans les bobines 312f qui entourent les dents 312a, 312b.

En mode générateur toujours, puisque les bobines 312f ne sont pas alimentées, les interactions magnétiques entre les dents 312a, 312b et les sous-parties d'interaction 411 sont possibles grâce à des aimants 413, 414 disposés dans la partie d'interaction 41 ou des aimants 315 disposés dans les ensembles stator 31 entre les dents 312a, 312b et la culasse 311. On comprendra aussi que la machine 1 peut comprendre, à la fois, des aimants 413, 414 disposés dans la partie d'interaction 41, et des aimants 315 disposés dans les ensembles stator 31.

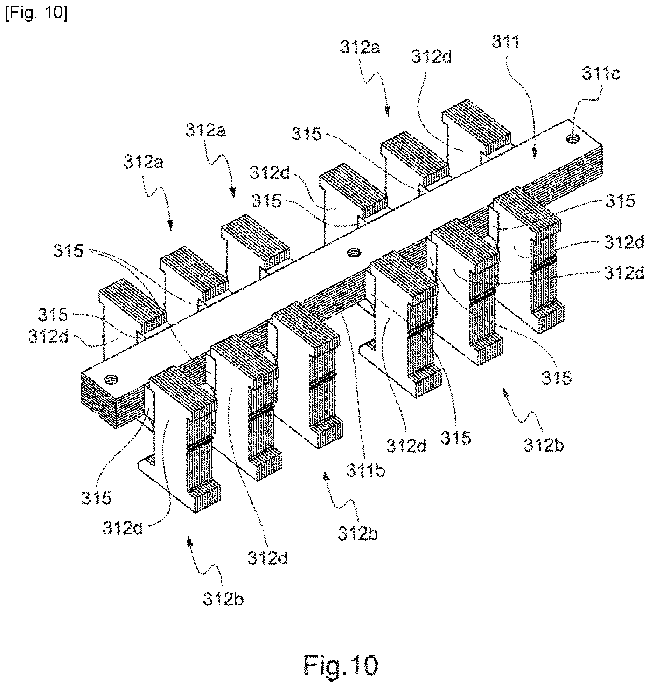

La Figure 10 présente un exemple de disposition d'aimants 315 entre les extrémités de tête 312d des dents 312a, 312b et les faces latérales de contact 311b de la culasse 311 d'un ensemble stator 31. On comprendra que dans ce cas, le dimensionnement des moyens de solidarisation 313 est ajusté pour permettre la solidarisation des dents 312a, 312b et des aimants 315 à la culasse 311.

Comme évoqué plus haut, selon une variante, lorsque les sous-parties d'interaction 411 comprennent des saillies, la partie d'interaction 41 peut être exempte d'aimants 413, 414, de telle sorte que la partie d'interaction 41 est formée d'une succession de sous-parties d'interaction 411 en saillie espacées selon la direction de déplacement. Dans ce cas, afin de permettre un fonctionnement de la machine 1 en mode générateur, des aimants 315 sont disposés entre les extrémités de tête 312d des dents 312a, 312b et les faces latérales de contact 311b des culasses 311, comme par exemple représenté sur la Figure 10, de manière à permettre des interactions magnétiques entre les sous-parties d'interaction 411 et les dents 312a, 312b lorsque les bobines 312f ne sont pas alimentées et à permettre un fonctionnement de la machine 1 en mode générateur.

On peut préciser qu'une disposition d'aimants 315 dans les ensembles stator 31 n'empêche pas un fonctionnement de la machine 1 en mode moteur.

Les aimants 315 disposés dans les ensembles stator 31 peuvent par exemple être des aimants permanents, des électroaimants ou des bobines supraconductrices.

De préférence, la machine 1 est configurée pour maximiser les zones d'interaction magnétique entre l'ensemble primaire 3 et l'ensemble secondaire 4. En particulier, chaque dent 312a, 312b est, de préférence, configurée pour qu'une surface projetée de l'extrémité de base 312e sur la partie d'interaction 41 soit supérieure à une surface projetée de la section de corps 312g sur la partie d'interaction 41. Selon le mode de réalisation représenté sur la Figure 6, les tôles 312c de chaque dent 312a, 312b sont configurées de telle sorte que l'extrémité de base 312e de la dent 312a, 312b présente un épanouissement dans la direction perpendiculaire à la direction d'empilement des tôles 311a de la culasse 311 et perpendiculaire à la direction de déplacement, de manière à augmenter la surface à travers laquelle passe le flux magnétique parcourant la dent 312a, 312b et les sous-parties d'interaction 411 en regard. On comprendra que, dans le cas de dents 312a, 312b se présentant sous forme monolithique, par exemple à base de poudre magnétique comme évoqué plus haut, l'épanouissement peut en outre s'étendre dans la direction de déplacement. Un épanouissement dans la direction de déplacement permet par exemple d'augmenter encore d'avantage la surface à travers laquelle passe le flux magnétique parcourant la dent 312a, 312b et les sous-parties d'interaction 411, ou bien d'avoir une section de corps 312g encore plus petite par rapport à l'extrémité de base 312e, de manière à augmenter le volume disponible autour de la dent 312a, 312b pour recevoir la bobine 312f entourant la dent, sans réduire la zone d'échange avec les sous-parties d'interaction 411.

On comprendra que, lorsqu'une surface projetée de l'extrémité de base 312e sur la partie d'interaction 41 est supérieure à une surface projetée de la section de corps 312g sur la partie d'interaction 41, le bobinage d'une bobine 312f autour des sections de corps 312g des dents 312a, 312b est beaucoup plus complexe.

On peut préciser ici que les moyens de solidarisation 313 selon l'invention, rendent possible la formation des bobines 312f autour des dents 312a, 312b de manière facile lorsque les dents 312a, 312b sont indépendantes des culasses 311, c'est-à-dire avant montage, puis la solidarisation des dents 312a, 312b entourées de leur bobine 312f sur les culasses 311.

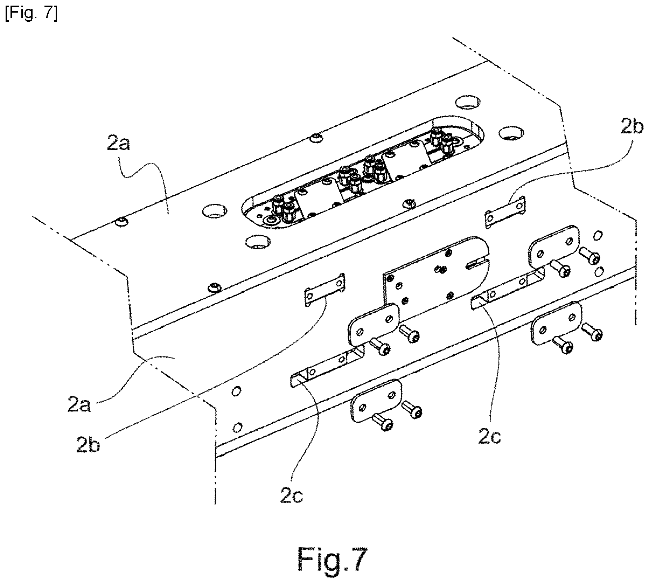

En se référant aux Figures 4 et 7, on va maintenant décrire les moyens de fixation 314 d'un ensemble stator 31, qui sont configurés pour fixer ledit ensemble stator 31 au bâti 2. De préférence, les moyens de fixation 314 sont réalisés en un matériau non magnétisable, par exemple un alliage d'aluminium, un alliage de titane, un alliage d'acier inoxydable ou du plastique.

Selon le mode de réalisation représenté sur les Figures 4 et 7, les moyens de fixation 314 comprennent, pour chaque ensemble stator 31, deux plateformes 314a.

Comme illustré sur la Figure 4, chaque plateforme 314a est disposée à une extrémité respective de l'ensemble stator 31, selon la direction de déplacement, et est, de préférence, fixée aux deux mâchoires 313a, 313b des moyens de solidarisation 313, par exemple par vissage, par collage ou par soudage. De préférence encore, les plateformes 314a sont disposées entre les mâchoires 313a, 313b et la partie d'interaction 41, de telle sorte que les plateformes 314a permettent un montage et un démontage facile des mâchoires 313a, 313b encapsulant la culasse 311 et les dents 312a, 312b tout en garantissant une conservation de leur bon positionnement. On comprendra cependant que les plateformes 314a pourraient être disposées de telle sorte que les mâchoires 313a, 313b soient disposées entre la partie d'interaction 41 et les plateformes 314a. On comprendra aussi que, selon des variantes moins préférées les moyens de fixation 314 pourraient comprendre une seule plateforme 314a pour chaque ensemble stator 31, ou bien que chaque plateforme 314a pourrait être fixée à seulement une mâchoire 313a, 313b.

Selon le mode de réalisation représenté sur la Figure 4, les plateformes 314a s'étendent de part en part de l'ensemble stator 31 selon la direction perpendiculaire à la direction d'empilement des tôles 311a de la culasse 311 et perpendiculaire à la direction de déplacement. On comprendra cependant que chaque plateforme 314a pourrait en variante comprendre deux parties, chacune fixée d'un côté respectif de l'ensemble stator 31.

Par ailleurs, lorsque les moyens de solidarisation 313 ne comprennent pas de mâchoire 313a, 313b, on comprendra que les moyens de fixation 314 sont configurés pour être fixés à l'ensemble stator 31, par exemple directement à la culasse 311, par exemple par vissage, par collage ou par soudage.

Selon le mode de réalisation de la Figure 7, le bâti 2 comprend des trous de fixation 2b, et des trous de fixation allongés 2c s'étendant selon la direction de déplacement. De préférence, les trous de fixation 2b et les trous de fixation allongés 2c sont formés dans le carter 2a. On comprendra cependant que, lorsque le bâti 2 ne comprend pas de carter 2a, les trous de fixation 2b et les trous de fixation allongés 2c peuvent être formés dans d'autres éléments du bâti, par exemple des barres ou des tubes, ou le bâti peut comprendre des éléments, par exemple des pattes de fixation, spécialement configurés pour définir les tous de fixation 2b et les trous de fixation allongés 2c.

Des extrémités 314e des plateformes 314a, selon la direction perpendiculaire à la direction d'empilement des tôles 311a de la culasse 311 et perpendiculaire à la direction de déplacement, sont configurées pour être fixées au bâti 2. En particulier, lesdites extrémités 314e sont configurées pour être introduites dans les trous de fixation 2b et les trous de fixation allongés 2c. On comprendra que les trous de fixation allongés 2c présentent pour avantage, par rapport au trou de fixation 2b, de permettre un réglage de la position de l'ensemble stator 31 selon la direction de déplacement. On comprendra donc que selon une variante non préférée, le bâti 2 peut comprendre uniquement des trous de fixation 2b, et aucun trou de fixation allongé 2c.

Un réglage de la position des ensembles stator 31 selon la direction de déplacement, grâce aux trous de fixation allongés 2c, permet notamment de réduire les forces de détente de la machine 1. Dans le cas de l'utilisation de deux ensembles stator 31, le réglage de la position de l'un des ensembles stator 31 est suffisant pour réduire les forces de détente de la machine.

Selon le mode de réalisation représenté sur la Figure 4, les moyens de fixation 314 comprennent en outre des vis de réglage d'entrefer 314b et des cales d'entrefer 314c.

Les vis de réglage d'entrefer 314b sont reçues dans des perçages formés dans les mâchoires 313a, 313b et sont configurées pour permettre un réglage d'un espacement entre les mâchoires 313a, 313b et les plateformes 314a. On comprendra qu'un vissage des vis de réglage d'entrefer 314b permet d'augmenter l'espacement entre les mâchoires 313a, 313b et les plateforme 314a, et qu'un dévissage des vis de réglage d'entrefer 314b permet de réduire l'espacement entre les mâchoires 313a, 313b et les plateformes 314a. On comprendra ainsi que les vis de réglage d'entrefer 314b permettent de régler l'entrefer 6 entre les dents 312a, 312b des ensembles stator 31 et les sous-parties d'interaction 411 de la partie d'interaction 41.

Les cales d'entrefer 314c sont configurées pour être disposées dans des évidements 314d formés dans les plateformes 314a sur une face en regard des mâchoires 313a, 313b, de telle sorte que les mâchoires 313a, 313b sont en contact avec les cales d'entrefer 314c.

On comprendra que, grâce à une combinaison d'un changement du nombre de cales d'entrefer 314c disposées dans chaque évidement 314d et d'un changement de l'épaisseur des cales d'entrefer 314c, il est possible de modifier l'espacement entre les mâchoires 313a, 313b et les plateformes 314a.

On comprendra ainsi que l'utilisation de cales d'entrefer 314c calibrées, par exemple d'une épaisseur de 0,1 mm, permettent de régler finement l'entrefer 6 entre les dents 312a, 312b des ensembles stator 31 et les sous-parties d'interaction 411 de la partie d'interaction 41.

Un tel réglage de l'entrefer 6 permet par exemple de rattraper des jeux de fabrication ou bien d'optimiser la valeur de l'entrefer 6 suite au réglage de la position d'un ensemble stator 31 par coulissement selon la direction de déplacement. Un réglage de l'entrefer 6 permet alors notamment de réduire les efforts générés dans des directions perpendiculaires à la direction de déplacement générés en raison de valeurs d'entrefer 6 différentes entre la partie d'interaction 41 et chaque ensemble stator 31. Ces efforts orthogonaux induisent des frottements dans les moyens de guidage en translation 5 et nuisent au fonctionnement de la machine 1. Un réglage de l'entrefer 6 permet ainsi une amélioration des performances générales de la machine 1.

On comprendra cependant qu'en variante, les moyens de fixation 314 peuvent comprendre uniquement des vis de réglage d'entrefer 314b ou uniquement des cales d'entrefer 314c.

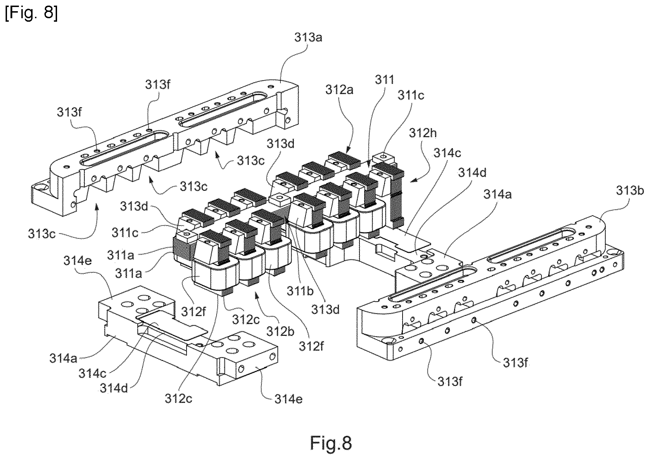

La Figure 8 présente un ensemble stator 31 selon une variante du mode de réalisation représenté sur les Figures 4 et 5. Pour cette variante les moyens de fixation 314 sont identiques à ceux du mode de réalisation représenté sur les Figures 4 et 7.

Un ensemble stator 31 selon le mode de réalisation représenté sur la Figure 8 est identique à un ensemble stator 31 selon le mode de réalisation représenté sur les Figures 4 et 5 à l'exception du fait qu'il comprend en outre une dent supplémentaire 312h.

Selon cette variante, et comme cela a brièvement été évoqué plus haut, l'une des mâchoires 313a, 313b comprend, de préférence, un évidement 313c supplémentaire, de telle sorte que les moyens de solidarisation 313 sont configurés pour solidariser la dent supplémentaire 312h à la culasse 31, de la même manière que pour les dents 312a, 312b des paires 312 de dents 312a, 312b.

La dent supplémentaire 312h est disposée en contact avec une face latérale de contact 311b de la culasse 311 de l'ensemble stator 31.

De préférence, afin d'améliorer la compacité de l'ensemble stator 31, la dent supplémentaire 312h est disposée la plus à une extrémité longitudinale de ladite culasse 311. De préférence encore, et toujours pour améliorer la compacité, l'ensemble stator 31 est configuré de telle sorte que la dent supplémentaire 312h est en contact avec la même face latérale de contact 311b de la culasse 311 qu'une dent 312a, 312b disposée la plus à une extrémité longitudinale opposée de ladite culasse 311.

L'utilisation d'une dent supplémentaire 312h permet de casser la symétrie magnétique de l'ensemble stator 31, de telle sorte qu'il sera plus compliqué, voire impossible, pour les sous-parties d'interaction 411 de l'ensemble secondaire 4 de s'aligner avec les dents 312a, 312b de l'ensemble stator 31 après un déplacement relatif de l'ensemble secondaire 4 par rapport à l'ensemble primaire 3, réduisant ainsi les forces de détente de la machine 1.

On peut préciser ici que les dimensions de la dent supplémentaire 312h peuvent être différentes des dimensions des dents 312a, 312b des paires 312 de dents 312a, 312b, en particulier une épaisseur dans la direction de déplacement peut être différente. On comprendra cependant que, de préférence, les dimensions de la dent supplémentaire 312h sont configurées pour permettre une solidarisation de la dent supplémentaire 312h sur la culasse 311 par les moyens de solidarisation 313 de l'ensemble stator 31.

On comprendra aussi que la dent supplémentaire 312h peut être réalisée à partir d'un empilement de tôles en matériau magnétisable ou sous la forme d'une pièce monolithique, par exemple formée à partir de poudre magnétique.

En mode moteur, les interactions magnétiques entre les dents 312a, 312b de l'ensemble primaire 3 et les sous-parties d'interaction 411 de l'ensemble secondaire 4 sont créées à l'aide des bobines 312f entourant les dents 312a, 312b qui sont alimentées grâce au module électrique 7. Comme évoqué plus haut, l'ensemble secondaire 4 peut également comprendre des aimants 413, 414 disposés entre les sous-parties d'interaction 411 afin de renforcer les interactions magnétiques. Cependant, la partie d'interaction 41 peut aussi être exempte d'aimants 413, 414 si les sous-parties d'interaction 411 comprennent des saillies espacées selon la direction de déplacement, les interactions sont alors simplement formées entre les dents 312a, 312b et les saillies.

Comme indiqué plus haut, la machine 1 est, de préférence, configurée, pour permettre, pour chaque paire 312 de dents 312a, 312b, un bouclage magnétique entre la première dent 312a, la culasse 311 et la seconde dent 312b. Par ailleurs, les sous parties d'interaction 411 sont réparties au sein de la partie d'interaction 41 et les dents 312a, 312b sont réparties le long des culasses 311, de telle sorte que lorsqu'une paire 312 de dents 312a, 312b se trouve directement en regard de sous-parties d'interaction 411, alors au moins une autre paire 312 de dents 312a, 312b de la machine se trouve décalée par rapport aux sous-parties d'interactions 411 de la partie d'interaction 41 en regard. Ainsi, les variations des champs magnétiques, produits par les bobines 312f, liées aux variations de l'alimentation alternative polyphasée permettent un déplacement relatif de l'ensemble primaire 3 par rapport à l'ensemble secondaire 4.

En mode générateur, les bobines 312f qui entourent les dents 312a, 312b ne sont pas alimentées et ne génèrent donc pas de champ magnétique. Il est donc nécessaire que des aimants 315, 413, 414 soient disposés dans la machine 1 pour générer des champs magnétiques, de telle sorte qu'un mouvement relatif de l'ensemble secondaire 4 par rapport à l'ensemble primaire 3 puisse générer des courants alternatifs dans les bobines 312f, de manière à ce que les courants alternatifs soient collectés à l'aide du module électrique 7. Comme indiqué plus haut, la machine peut comprendre des aimants 315 disposés dans les ensembles stator 31, des aimants 413, 414 disposés dans la partie d'interaction 41, ou une combinaison d'aimants 315 disposés dans les ensembles stator 31 et d'aimants 413, 414 disposés dans la partie d'interaction 41. La disposition d'aimants 315 uniquement dans les ensembles stator 31 peut être une solution pour réduire la quantité d'aimants nécessaire au fonctionnement de la machine 1, pour réduire le poids de l'ensemble secondaire 4, ou pour réduire le coût de la machine 1.

Tout comme pour le mode moteur, en mode générateur, il est nécessaire que les sous-parties d'interaction 411 comprennent des saillies si la partie d'interaction 41 est exempte d'aimants 413, 414. Dans ce cas, il est également nécessaire que des aimants 315 soient disposés dans les ensembles stator 31, comme par exemple représenté sur la Figure 10.

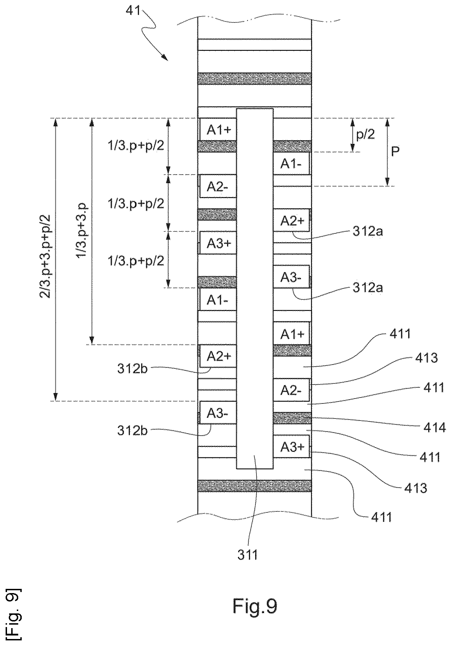

Afin de permettre un fonctionnement de la machine 1 avec un pas polaire faible, l'invention prévoit également une répartition et un espacement avantageux des paires 312 de dents 312a, 312b le long des culasses 311 des ensembles stator 31. Des règles de périodicité vont être présentées ci-dessous en référence à la Figure 9. On considère ici une machine selon la Figure 1 comprenant des aimants 413, 414 dans la partie d'interaction 41, et un module électrique 7 transmettant une alimentation alternative triphasée dont les trois phases sont notées respectivement A₁, A₂ et A₃, chaque paire 312 de dents 312a, 312b étant alimentée à partir de l'une des phases A₁, A₂ et A₃.

Comme indiqué plus haut, les bobines 312f de chaque paire 312 de dents 312a, 312b sont configurées pour générer une polarité à l'extrémité de base 312e, respectivement à l'extrémité de tête 312d, de la première dent 312a et pour générer une polarité opposée à l'extrémité de base 312e, respectivement à l'extrémité de tête 312d, de la seconde dent 312b.

De préférence, la bobine 312f de la seconde dents 312b est bobinée dans le sens opposé au sens de bobinage de la bobine 312f de la première dent 312a. Cependant, en variante, on comprendra que le courant pourrait être amené à circuler dans un sens opposé dans la bobine 312 de la seconde dent 312b, par rapport à la bobine 312f de la première dent 312a, ou que la bobine 312f de la seconde dent 312b pourrait être alimentée par un courant opposé à celui qui alimente la bobine de la première dent 312a. On comprendra donc que pour chaque paire 312 de dents 312a, 312b, la bobine 312f de la première dent 312a et la bobine 312f de la seconde dent 312b sont alimentées dans des sens opposés, sont alimentées avec des courants opposés ou sont bobinées dans des sens opposés.

On comprendra aussi que pour une dent 312a, 312b la notation Aᵢ+ représente une alimentation de la bobine 312f qui l'entoure à partir de la phase Aᵢ et un sens de bobinage opposé, ou un sens opposé de circulation du courant, ou un courant opposé, par rapport à la notation Aᵢ-. On comprendra également que pour chaque paire 312, l'une de la première dent 312a et de la seconde dent 312b est notée Aᵢ+, et l'autre de la première dent 312a et de la seconde dent 312b est notée Aᵢ-.

Si l'on note Eₐ l'épaisseur d'un aimant nord-sud 413, ou sud-nord 414 selon la direction de déplacement, et Eₘ l'épaisseur d'une sous-partie d'interaction 411 selon la direction de déplacement, et que l'on définit le pas polaire p comme la distance, selon la direction de déplacement, entre le centre de deux sous-parties d'interaction 411 de même polarité consécutives, alors on a p = 2 × (Eₐ + Eₘ).

Par ailleurs, comme indiqué plus haut, pour chaque paire 312 de dents 312a, 312b, lorsque la première dent 312a se trouve directement en regard d'une sous-partie d'interaction 411, la seconde dent 312b se trouve directement en regard d'une autre sous-partie d'interaction 411 de polarité opposée, de telle sorte que pour une paire 312 donnée, la dent Aᵢ+ est décalée de εₚ × (p/2) selon la direction de déplacement par rapport à la dent Aᵢ-, avec εₚ = ±1 en fonction de la paire 312 de dents 312a, 312b donnée.

De préférence, pour chaque ensemble stator 31, les dents 312a, 312b sont disposées le long de la culasse 311 de telle sorte que pour chaque couple c donné, composé d'une dent A₁+ et d'une dent A₂+, d'une autre paire 312 de dents 312a, 312b, il existe un entier relatif k_{c}, et que la dent Aᵢ+ est décalée de k_{c} × p + (1/3) × p selon la direction de déplacement par rapport à la dent A₂+ ; et que pour chaque couple c' donné, composé d'une dent Aᵢ- et d'une dent A₂-, d'une autre paire 312 de dents 312a, 312b, il existe un entier relatif k_{c}', et que la dent Aᵢ- est décalée de k_{c}' x p + (1/3) x p selon la direction de déplacement par rapport à la dent A₂-.

De préférence encore, pour chaque ensemble stator 31, les dents 312a, 312b sont disposées le long de la culasse 311 de telle sorte que pour chaque couple d donné, composé d'une dent A₁+ et d'une dent A₃+, d'une autre paire 312 de dents 312a, 312b, il existe un entier relatif n_{d}, et que la dent A₁+ est décalée de n_{d} × p + (2/3) × p selon la direction de déplacement par rapport à la dent A₃+ ; et que pour chaque couple d' donné, composé d'une dent A₁- et d'une dent A₃-, d'une autre paire 312 de dents 312a, 312b, il existe un entier relatif n_{d}', et que la dent A₁- est décalée de n_{d}' × p + (2/3) × p selon la direction de déplacement par rapport à la dent A₃-.

De préférence toujours pour chaque ensemble stator 31, les dents 312a, 312b sont disposées le long de la culasse 311 de telle sorte que pour chaque couple e donné, composé d'une dent A₁+ et d'une dent A₂-, d'une autre paire 312 de dents 312a, 312b, il existe un entier relatif kₑ, de telle sorte que la dent A₁+ est décalée de la dent A₂- de kₑ × p + (1/3) × p + εₑ × (p/2), avec εₑ = ±1 en fonction du couple e donné.

De préférence encore, pour chaque ensemble stator 31, les dents 312a, 312b sont disposées le long de la culasse 311 de telle sorte que pour chaque couple f donné, composé d'une dent A₁+ et d'une dent A₃-, d'une autre paire 312 de dents 312a, 312b, il existe un entier relatif n_{f}, de telle sorte que la dent A₁+ est décalée de la dent A₃- de n_{f} × p + (2/3) × p + ε_{f} × (p/2), avec ε_{f} = ±1 en fonction du couple f donné. La Figure 9 présente une répartition possible pour les dents 312a, 312b le long de la culasse 311 pour une machine comprenant six paires 312, à savoir A₁+/A₁-; A₂-/A₂+ ; A₃+/A₃-, puis A₁-/A₁+ ; A₂+/A₂-, A₃-/A₃+

L'Homme du métier comprendra que le système triphasé décrit ci-dessus pourrait être généralisé à un système polyphasé à m phases.

Dans ce cas, de préférence, pour chaque ensemble stator 31, les dents 312a, 312b sont disposées le long de la culasse 311 de telle sorte que pour chaque couple h donné, composé d'une dent Aᵢ+ et d'une dent A_{i+z}+, d'une autre paire 312 de dents 312a, 312b, il existe un entier relatif kₕ, et que la dent Aᵢ+ est décalée de kₕ × p + (z/m) × p selon la direction de déplacement par rapport à la dent A_{i+z}+, avec m un entier supérieur ou égal à 2, et pour i un entier compris entre 1 et m-1 et z un entier compris entre 1 et m-i.

On comprendra que pour une paire 312 donnée la dent Aᵢ+ est là aussi décalée de εₚ x (p/2) selon la direction de déplacement par rapport à la dent A;-, avec εₚ = ±1 en fonction de la paire 312 de dents 312a, 312b donnée.

Selon l'invention, par forces de détente on entend des forces qui, en l'absence de courant dans les bobines 312f, s'exercent dans la direction de déplacement, entre la partie d'interaction 41 et les dents 312a, 312b des ensembles stator 31.

## Revendications

1. - Machine électrique (1) à mouvement linéaire selon une direction de déplacement, configurée pour fonctionner selon au moins l'un d'un mode moteur, dans lequel une énergie électrique est transformée en énergie mécanique de type mouvement linéaire selon la direction de déplacement, et d'un mode générateur, dans lequel une énergie mécanique de type mouvement linéaire selon la direction de déplacement est transformée en énergie électrique, ladite machine électrique comprenant :
- un ensemble primaire (3) comprenant au moins un ensemble stator (31) configuré pour être fixé à un bâti (2) ;
- un ensemble secondaire (4) configuré pour se déplacer de manière relative par rapport à l'ensemble primaire (3) selon la direction de déplacement, l'ensemble secondaire (4) comprenant une partie d'interaction (41) au sein de laquelle une pluralité de sous-parties d'interaction (411) sont réparties selon la direction de déplacement, et au moins un arbre (42), qui est solidaire de la partie d'interaction (41) et s'étend selon la direction de déplacement,
chaque ensemble stator (31) étant disposé en regard de la partie d'interaction (41) de l'ensemble secondaire (4) ;
- des moyens de guidage en translation (5) configurés pour guider le mouvement relatif de l'ensemble secondaire (4) par rapport à l'ensemble primaire (3) ; et
- un module électrique (7) ;
chaque ensemble stator (31) comprend :
- une culasse (311) qui comprend au moins deux faces latérales de contact (311b), définies de part et d'autre d'un axe parallèle à la direction de déplacement et passant par le centre de la culasse (311) ;
- au moins deux paires (312) de dents (312a, 312b), chaque dent (312a, 312b) ayant une extrémité de tête (312d) configurée pour venir en contact avec une face latérale de contact (311b) de la culasse (311) et une extrémité de base (312e), opposée à l'extrémité de tête (312d), configurée pour être orientée vers la partie d'interaction (41) de l'ensemble secondaire (4), de telle sorte qu'un entrefer (6) est formé entre les dents (312a, 312b) et les sous-parties d'interaction (411) de l'ensemble secondaire (4) et que lors d'un mouvement relatif de l'ensemble secondaire (4) par rapport à l'ensemble primaire (3), une sous-partie d'interaction (411) de l'ensemble secondaire (4) se déplace relativement parallèlement à la surface formée par les extrémités de base (312e) des dents (312a, 312b) de l'ensemble stator (31) qui est en regard, les paires (312) de dents (312a, 312b) étant espacées les unes des autres le long de la culasse (311) selon la direction de déplacement, les dents (312a, 312b) d'une paire (312) de dents (312a, 312b) étant agencées en diagonale le long de la culasse (311), de telle sorte que pour chaque paire (312) de dents (312a, 312b), une première dent (312a) est en contact avec une face latérale de contact (311b) de la culasse (311) et une seconde dent (312b) est en contact avec une autre face latérale de contact (311b) de la culasse (311), une bobine (312f) entourant chaque dent (312a, 312b) autour d'une section de corps (312g) entre l'extrémité de tête (312d) et l'extrémité de base (312e), et chaque dent (312a, 312b) étant configurée pour interagir magnétiquement avec des sous-parties d'interaction (411) de l'ensemble secondaire (4) en regard ;
- des moyens de solidarisation (313) configurés pour être aptes à solidariser les dents (312a, 312b) à la culasse (311), les moyens de solidarisation (313) étant configurés de telle sorte qu'au moins l'une des conditions suivantes est satisfaite :
a) pour au moins un ensemble stator (31), les moyens de solidarisation (313) comprennent au moins un matériau de type résine configuré pour encapsuler les dents (312a, 312b) sur la culasse (311) ;
b) pour au moins un ensemble stator (31), les moyens de solidarisation (313) comprennent deux mâchoires (313a, 313b), disposées de part et d'autre de la culasse (311), configurées pour solidariser les dents (312a, 312b) sur la culasse (311), chaque mâchoire (313a, 313b) comprenant au moins une platine, une première mâchoire (313a) étant destinée à recevoir les premières dents (312a) des paires (312) de dents (312a, 312b) et une seconde mâchoire (313b) étant destinée à recevoir les secondes dents (312b) des paires (312) de dents (312a, 312b), et les deux mâchoires (313a, 313b) étant configurées pour être rendues solidaires l'une de l'autre de manière à mettre en contact les dents (312a, 312b) et la culasse (311) ;
c) pour au moins un ensemble stator (31), au moins l'une des dents (312a, 312b) est soudée à la culasse (311) ;
d) pour au moins un ensemble stator (31), au moins l'une des dents (312a, 312b) est collée à la culasse (311);
e) pour au moins un ensemble stator (31), la culasse (311) comprend une rainure, s'étendant selon la direction de déplacement, et les dents (312a, 312b) comprennent des saillies configurées pour s'engager dans la rainure, ou inversement ; et
- des moyens de fixation (314) configurés pour fixer l'ensemble stator (31) au bâti (2) ;
la machine électrique (1) à mouvement linéaire comprenant en outre au moins l'un parmi des aimants (413, 414) disposés entre des sous-parties d'interaction (411) de la partie d'interaction (41) de l'ensemble secondaire (4), et des aimants (315) disposés entre les dents (312a, 312b) et la culasse (311) d'au moins un ensemble stator (31) ;
en mode moteur, le module électrique (7) est configuré pour transmettre une alimentation alternative polyphasée aux bobines (312f) de manière à générer des champs magnétiques variables dans le temps,
chaque bobine (312f) étant configurée et alimentée de manière à générer une polarité magnétique à l'extrémité de base (312e) de la dent (312a, 312b) qu'elle entoure et à générer une polarité magnétique opposée à l'extrémité de tête (312d) de la dent (312a, 312b) qu'elle entoure, et les bobines (312f) de chaque paire (312) de dents (312a, 312b) étant configurées pour générer une polarité à l'extrémité de base (312e), respectivement à l'extrémité de tête (312d), de la première dent (312a) et pour générer une polarité opposée à l'extrémité de base (312e), respectivement à l'extrémité de tête (312d), de la seconde dent (312b), de manière à créer un bouclage magnétique transversal entre ladite première dent (312a), la culasse (311) et ladite seconde dent (312b), et
les bobines (312f) de chaque paire (312) de dents (312a, 312b) étant configurées et alimentées de telle sorte que les champs magnétiques produits varient en fonction des variations de l'alimentation alternative polyphasée de manière à produire un déplacement relatif de l'ensemble secondaire (4) par rapport à l'ensemble primaire (3) ;
en mode générateur, le module électrique (7) est configuré pour récupérer des courants électriques générés, dans les bobines (312f) entourant les dents (312a, 312b) de l'ensemble primaire (3), par des interactions magnétiques formées entre la partie d'interaction (41) de l'ensemble secondaire (4) et les dents (312a, 312b) de l'ensemble primaire (3).

2. - Machine électrique (1) à mouvement linéaire selon la revendication 1, **caractérisée par le fait que**, pour au moins une dent (312a, 312b), une surface projetée de l'extrémité de base (312e) sur la partie d'interaction (41) est supérieure à une surface projetée de la section de corps (312g) sur la partie d'interaction (41).

3. - Machine électrique (1) à mouvement linéaire selon la revendication 1 lorsque la condition b) est satisfaite, **caractérisée par le fait que** chaque mâchoire (313a, 313b) comprend au moins autant d'évidements (313c) qu'il y a de paires (312) de dents (312a, 312b), chaque évidement (313c) étant configuré pour être apte à recevoir une dent (312a, 312b), chaque mâchoire (313a, 313b) comprenant en outre des moyens de blocage configurés pour bloquer chaque dent (312a, 312b) dans l'évidement (313c) dans lequel elle est reçue.

4. - Machine électrique (1) à mouvement linéaire selon la revendication 3, **caractérisée par le fait que** les moyens de blocage comprennent au moins un coin (313d) configuré pour être disposé dans un évidement (313c) et être apte à être déplacé dans ledit évidement (313c), le long de la dent (312a, 312b) reçue dans ledit évidement (313c), afin de bloquer ladite dent (312a, 312b) dans ledit évidement (313c).

5. - Machine électrique (1) à mouvement linéaire selon la revendication 3 ou selon la revendication 4, **caractérisée par le fait que** les dimensions d'au moins l'un des évidements (313c) recevant une dent (312a, 312b) sont choisies pour permettre un réglage de la position de la dent (312a, 312b) reçue dans ledit au moins un évidement (313c) le long de la culasse (311) dudit au moins un ensemble stator (31), selon la direction de déplacement, par insertion d'une cale dans ledit au moins un évidement (313c), par exemple pour réduire les forces de détente de la machine.

6. - Machine électrique (1) à mouvement linéaire selon l'une quelconque des revendications 3 à 5, **caractérisée par le fait qu'**au moins l'un des évidements (313c) recevant une dent (312a, 312b) est prolongé par au moins un perçage traversant (313f) configuré pour recevoir une vis (313g) apte à appliquer une pression sur la dent (312a, 312b) reçue dans ledit évidement (313c), de manière à améliorer un contact entre ladite dent (312a, 312b) et ladite culasse (311).

7. - Machine électrique (1) à mouvement linéaire selon l'une quelconque des revendications 1 à 6, **caractérisée par le fait que**, pour au moins un ensemble stator (31), les moyens de fixation (314) comprennent au moins une plateforme (314a), chaque plateforme (314a) étant fixée à la fois au bâti (2) et à l'au moins un ensemble stator (31).

8. - Machine électrique (1) à mouvement linéaire selon la revendication 7, **caractérisée par le fait que** l'au moins un ensemble stator (31) comprend en outre au moins l'un parmi des vis de réglage d'entrefer (314b) configurées pour permettre une modification d'un espacement entre l'au moins une plateforme (314a) et l'au moins une mâchoire (313a, 313b), et
des cales d'entrefer (314c) disposées entre l'au moins une plateforme (314a) et l'au moins une mâchoire (313a, 313b), de manière à permettre un réglage de l'entrefer (6) entre les dents (312a, 312b) dudit au moins un ensemble stator (31) et les sous-parties d'interaction (411) en regard, grâce à au moins l'un parmi un changement du nombre de cales d'entrefer (314c) et un changement de l'épaisseur des cales d'entrefer (314c).

9. - Machine électrique (1) à mouvement linéaire selon l'une quelconque des revendications 1 à 8, **caractérisée par le fait que** la partie d'interaction (41) de l'ensemble secondaire (4) comprend une pluralité de tôles (411a, 411b) qui sont empilées selon la direction de déplacement et sont assemblées entre elles, et des supports (412) qui s'étendent selon la direction de déplacement, au moins certaines tôles (411b) comprenant des protubérances (411c), et les supports (412) étant configurés pour venir en prise avec les protubérances (411c) afin d'assurer la tenue mécanique de l'ensemble secondaire (4).

10. - Machine électrique (1) à mouvement linéaire selon l'une quelconque des revendications 1 à 9, **caractérisée par le fait qu'**au moins une cavité (415), s'étendant suivant la direction de déplacement, est formée dans la partie centrale de la partie d'interaction (41) de l'ensemble secondaire (4), de manière à limiter un court-circuit magnétique dans la partie d'interaction (41).

11. - Machine électrique (1) à mouvement linéaire selon l'une quelconque des revendications 1 à 10, **caractérisée par le fait que** les sous-parties d'interaction (411) comprennent des saillies en un matériau apte à être attiré par un champ magnétique, faisant saillie vers des dents (312a, 312b) de l'ensemble primaire (3) situées en regard.

12. - Machine électrique (1) à mouvement linéaire selon l'une quelconque des revendications 1 à 11, pour laquelle des aimants (413, 414) sont disposés entre des sous-parties d'interaction (411) de la partie d'interaction (41) de l'ensemble secondaire (4), **caractérisée par le fait que** les sous-parties d'interaction (411) sont des masses polaires, en matériau magnétisable, magnétisées par des aimants (413, 414) disposés entre chaque masse polaire.

13. - Machine électrique à mouvement linéaire selon l'une quelconque des revendications 1 à 12, **caractérisée par le fait qu'**au moins un ensemble stator (31) comprend en outre une dent supplémentaire (312h) disposée en contact avec une face latérale de contact (311b) de la culasse (311) dudit au moins un ensemble stator (31), ledit au moins un ensemble stator (31) étant configuré de telle sorte que ladite dent supplémentaire (312h) permet de casser une symétrie magnétique dudit au moins un ensemble stator (31), par exemple pour réduire les forces de détente de la machine (1).

14. - Machine électrique (1) à mouvement linéaire selon l'une quelconque des revendications 1 à 13, **caractérisée par le fait qu'**au moins un ensemble stator (31) est fixé au bâti (2) à l'aide des moyens de fixation (314) de manière à pouvoir être déplacé, lors d'une phase de réglage de la machine (1), par coulissement dans la direction de déplacement afin de permettre un ajustement de sa position, par exemple pour réduire des forces de détente de la machine (1).

15. - Machine électrique (1) à mouvement linéaire selon l'une quelconque des revendications 1 à 14, **caractérisée par le fait qu'**au moins une dent (312a, 312b) comprend une pluralité de tôles (312c) planes, empilées selon une direction d'empilement parallèle à la direction de déplacement.

16. - Machine électrique à mouvement linéaire selon l'une quelconque des revendications 1 à 15, **caractérisée par le fait qu'**au moins une culasse (311) comprend une pluralité de tôles (311a) empilées selon une direction d'empilement perpendiculaire à un premier axe, parallèle à la direction de déplacement et passant par le centre de la partie d'interaction (41) de l'ensemble secondaire (4), et à un second axe, qui correspond à l'axe parallèle à la direction de déplacement et passant par le centre de ladite au moins une culasse (311) .

17. - Machine électrique (1) à mouvement linéaire selon l'une quelconque des revendications 1 à 16, **caractérisée par le fait qu'**au moins l'une parmi une dent (312a, 312b) et une culasse (311) se présente sous la forme d'une pièce formée à partir de poudre magnétique.

18. - Machine électrique (1) à mouvement linéaire selon l'une quelconque des revendications 1 à 17, **caractérisée par le fait que** les moyens de guidage en translation (5) comprennent au moins l'un parmi un patin à billes (51a) disposé entre l'ensemble primaire (3) et l'ensemble secondaire (4), un patin à billes disposé entre le bâti et l'ensemble secondaire (4), et un élément de guidage d'arbre en translation (52), par exemple un palier linéaire lisse ou un palier linéaire à billes, disposé entre un arbre (42) et le bâti (2).

19. - Machine électrique (1) à mouvement linéaire selon l'une quelconque des revendications 1 à 18, **caractérisée par le fait qu'**elle comprend en outre un carter (2a) configuré pour contenir, à tout instant d'une utilisation, au moins l'ensemble primaire (3) et la partie d'interaction (41) de l'ensemble secondaire (4).

20. - Machine électrique à mouvement linéaire selon l'une quelconque des revendications 1 à 19, **caractérisée par le fait que** les décalages entre les dents, selon la direction de déplacement, respectent les conditions suivantes pour une alimentation polyphasée constituée de m phases dont les phases successives sont notées Aᵢ avec i un entier compris entre 1 et m, pour chaque paire (312) de dents (312a, 312b) les bobines (312f) étant alimentées à partir de l'une des phases Aᵢ et l'une de la première dent (312a) et de la seconde dent (312b) étant notée Aᵢ+ et l'autre de la première dent (312a) et de la seconde dent (312b) étant notée Aᵢ- ; Aᵢ- ayant, par rapport à Aᵢ+, l'un parmi un sens opposé d'enroulement de sa bobine (312f), un sens opposé de circulation de courant dans sa bobine (312f), et une alimentation de sa bobine (312f) avec un courant opposé ; le pas polaire étant noté p :
- pour chaque couple h donné, composé d'une dent Aᵢ+ et d'une dent A_{i+z}+, d'une autre paire (312) de dents (312a, 312b), il existe un entier relatif kₕ, et la dent Aᵢ+ est décalée de kₕ × p + (z/m) × p selon la direction de déplacement par rapport à la dent A_{i+z}+, avec m un entier supérieur ou égal à 2, et pour i un entier compris entre 1 et m-1 et z un entier compris entre 1 et m-i ; et
- pour chaque paire (312) de dents (312a, 312b) donnée comprenant une dent Aᵢ+ et une dent A;-, un décalage entre Aᵢ+ et A;- selon la direction de déplacement est égal à εₚ × (p/2), avec εₚ égal à 1 ou -1 en fonction de la paire (312) donnée.

## Patentansprüche

1. - Elektrische Maschine (1) mit linearer Bewegung in einer Bewegungsrichtung, die konfiguriert ist, um in mindestens einem von einem Motormodus, in dem elektrische Energie in mechanische Energie vom Typ lineare Bewegung entlang der Bewegungsrichtung umgewandelt wird, und einem Generatormodus, in dem mechanische Energie vom Typ lineare Bewegung entlang der Bewegungsrichtung in elektrische Energie umgewandelt wird, betrieben zu werden, die elektrische Maschine umfassend:
eine primäre Anordnung (3), umfassend mindestens eine Statoranordnung (31), die konfiguriert ist, um an einem Gestell (2) befestigt zu werden;
eine sekundäre Anordnung (4), die konfiguriert ist, um sich entlang der Bewegungsrichtung in Bezug auf die primäre Anordnung (3) zu bewegen, die sekundäre Anordnung (4) umfassend einen Interaktionsabschnitt (41), in dem eine Vielzahl von Interaktionsteilabschnitten (411) entlang der Bewegungsrichtung verteilt sind, und mindestens eine Welle (42), die einstückig mit dem Interaktionsabschnitt (41) ist und sich entlang der Bewegungsrichtung erstreckt,
wobei jede Statoranordnung (31) gegenüber dem Interaktionsabschnitt (41) der sekundären Anordnung (4) angeordnet ist;
Translationsführungseinrichtungen (5), die konfiguriert sind, um die relative Bewegung der sekundären Anordnung (4) in Bezug auf die primäre Anordnung (3) zu führen; und
ein elektrisches Modul (7);
wobei jede Statoranordnung (31) Folgendes umfasst:
ein Joch (311), das mindestens zwei seitliche Kontaktflächen (311b) umfasst, die auf beiden Seiten einer Achse parallel zu der Bewegungsrichtung und die durch die Mitte des Jochs (311) verläuft, definiert sind;
mindestens zwei Paare (312) von Zähnen (312a, 312b), wobei jeder Zahn (312a, 312b) ein vorderes Ende (312d), das konfiguriert ist, um eine seitliche Kontaktfläche (311b) des Jochs (311) zu berühren, und ein Basisende (312e) gegenüber dem vorderen Ende (312d) und das konfiguriert ist, um auf den Interaktionsabschnitt (41) der sekundären Anordnung (4) gerichtet zu sein, aufweist, sodass zwischen den Zähnen (312a, 312b) und den Interaktionsteilabschnitten (411) der sekundären Anordnung (4) ein Luftspalt (6) gebildet ist, und dass bei einer relativen Bewegung der sekundären Anordnung (4) in Bezug auf die primäre Anordnung (3), ein Interaktionsteilabschnitt (411) der sekundären Anordnung (4) sich relativ parallel zu der Fläche bewegt, die durch die Basisenden (312e) der Zähne (312a, 312b) der gegenüberliegenden Statoranordnung (31) gebildet wird, wobei die Paare (312) von Zähnen (312a, 312b) entlang des Jochs (311) in der Bewegungsrichtung voneinander beabstandet sind, die Zähne (312a, 312b) eines Paars (312) von Zähnen (312a, 312b) diagonal entlang des Jochs (311) angeordnet sind, sodass bei jedem Paar (312) von Zähnen (312a, 312b), ein erster Zahn (312a) mit einer seitlichen Kontaktfläche (311b) des Jochs (311) in Kontakt ist und ein zweiter Zahn (312b) mit einer anderen seitlichen Kontaktfläche (311b) des Jochs (311) in Kontakt ist, eine Spule (312f), die jeden Zahn (312a, 312b) um einen Körperabschnitt (312g) zwischen dem Kopfende (312d) und dem Basisende (312e) umgibt, und jeder Zahn (312a, 312b) konfiguriert ist, um magnetisch mit gegenüberliegenden Interaktionsteilabschnitt (411) der sekundären Anordnung (4) zu interagieren;
Verbindungseinrichtungen (313), die konfiguriert sind, um geeignet zu sein, die Zähne (312a, 312b) fest mit dem Joch (311) zu verbinden, wobei die Verbindungseinrichtungen (313) konfiguriert sind, sodass mindestens eine der folgenden Bedingungen erfüllt ist:
**a)** bei mindestens einer Statoranordnung (31) umfassen die Verbindungseinrichtungen (313) mindestens ein Material vom Typ Harz, das konfiguriert ist, um die Zähne (312a, 312b) auf dem Joch (311) einzukapseln;
**b)** bei mindestens einer Statoranordnung (31) umfassen die Verbindungseinrichtungen (313) zwei Backen (313a, 313b) umfassen, die auf beiden Seiten des Jochs (311) angeordnet und konfiguriert sind, um die Zähne (312a, 312b) fest mit dem Joch (311) zu verbinden, jede Backe (313a, 313b) umfassend mindestens eine Platine, wobei eine erste Backe (313a) dazu bestimmt ist, die ersten Zähne (312a) der Paare (312) von Zähnen (312a, 312b) aufzunehmen, und eine zweite Backe (313b) dazu bestimmt ist, die zweiten Zähne (312b) der Paare (312) von Zähnen (312a, 312b) aufzunehmen, und die zwei Backen (313a, 313b) konfiguriert sind, um fest miteinander verbunden zu werden, um die Zähne (312a, 312b) und das Joch (311) in Kontakt zu bringen;
**c)** bei mindestens einer Statoranordnung (31) ist mindestens einer der Zähne (312a, 312b) mit dem Joch (311) verschweißt;
**d)** bei mindestens einer Statoranordnung (31) mindestens ist einer der Zähne (312a, 312b) mit dem Joch (311) verklebt;
**e)** bei mindestens einer Statoranordnung (31) umfasst das Joch (311) eine Nut, die sich in der Bewegungsrichtung erstreckt, und die Zähne (312a, 312b) umfassen Vorsprünge, die konfiguriert sind, um in die Nut einzugreifen, oder umgekehrt; und
Befestigungseinrichtungen (314), die konfiguriert sind, um die Statoranordnung (31) an dem Gestell (2) zu befestigen;
die elektrische Maschine (1) mit linearer Bewegung ferner umfassend mindestens eines von Magneten (413, 414), die zwischen Interaktionsteilabschnitten (411) des Interaktionsabschnitts (41) der sekundären Anordnung (4) angeordnet sind, und Magneten (315), die zwischen den Zähnen (312a, 312b) und dem Joch (311) von mindestens einer Statoranordnung (31) angeordnet sind;
wobei das elektrische Modul (7) im Motorbetrieb konfiguriert ist, um eine mehrphasige Wechselstromversorgung an die Spulen (312f) zu übertragen, um zeitlich variable Magnetfelder zu erzeugen,
wobei jede Spule (312f) konfiguriert ist und versorgt wird, um an dem Basisende (312e) des Zahns (312a, 312b), den sie umgibt, eine magnetische Polarität zu erzeugen und an dem Kopfende (312d) des Zahns (312a, 312b), den sie umgibt, eine entgegengesetzte magnetische Polarität zu erzeugen, und wobei die Spulen (312f) von jedem Paar (312) von Zähnen (312a, 312b) konfiguriert sind, um an dem Basisende (312e) bzw. am dem Kopfende (312d) des ersten Zahns (312a) eine Polarität zu erzeugen, und um an dem Basisende (312e) bzw. an dem Kopfende (312d) des zweiten Zahns (312b) eine entgegengesetzte Polarität zu erzeugen, sodass zwischen dem ersten Zahn (312a), dem Joch (311) und dem zweiten Zahn (312b) eine transversale magnetische Schleife erzeugt wird, und
wobei die Spulen (312f) von jedem Paar (312) von Zähnen (312a, 312b) konfiguriert sind und versorgt werden, sodass die erzeugten Magnetfelder entsprechend den Variationen der mehrphasigen Wechselstromversorgung variieren, um eine relative Bewegung der sekundären Anordnung (4) in Bezug auf die primäre Anordnung (3) zu erzeugen;
wobei das elektrische Modul (7) in dem Generatormodus konfiguriert ist, um elektrische Ströme zurückzugewinnen, die durch magnetische Interaktionen, die zwischen dem Interaktionsabschnitt (41) der sekundären Anordnung (4) und den Zähnen (312a, 312b) der primären Anordnung (3) gebildet werden, in den Spulen (312f), die die Zähne (312a, 312b) der primären Anordnung (3) umgeben, erzeugt werden.

2. - Elektrische Maschine (1) mit linearer Bewegung nach Anspruch 1, **dadurch gekennzeichnet, dass** bei mindestens einem Zahn (312a, 312b) eine projizierte Fläche des Basisendes (312e) auf dem Interaktionsabschnitt (41) größer ist als eine projizierte Fläche des Körperabschnitts (312g) auf dem Interaktionsabschnitt (41).

3. - Elektrische Maschine (1) mit linearer Bewegung nach Anspruch 1, wenn Bedingung b) erfüllt ist, **dadurch gekennzeichnet, dass** jede Backe (313a, 313b) mindestens so viele Aussparungen (313c) umfasst, wie es Paare (312) von Zähnen (312a, 312b) gibt, wobei jede Aussparung (313c) konfiguriert ist, um geeignet zu sein, einen Zahn (312a, 312b) aufzunehmen, jede Backe (313a, 313b) ferner umfassend Arretiereinrichtungen, die konfiguriert sind, um jeden Zahn (312a, 312b) in der Aussparung (313c) zu arretieren, in der er aufgenommen ist.

4. - Elektrische Maschine (1) mit linearer Bewegung nach Anspruch 3, **dadurch gekennzeichnet, dass** die Arretiereinrichtungen mindestens einen Keil (313d) umfassen, der konfiguriert ist, um in einer Aussparung (313c) angeordnet zu sein und in der Aussparung (313c) entlang des in der Aussparung (313c) aufgenommenen Zahns (312a, 312b) verschiebbar zu sein, um den Zahn (312a, 312b) in der Aussparung (313c) zu arretieren.

5. - Elektrische Maschine (1) mit linearer Bewegung nach Anspruch 3 oder 4, **dadurch gekennzeichnet, dass** die Abmessungen mindestens einer der Aussparungen (313c), die einen Zahn (312a, 312b) aufnimmt, gewählt sind, um eine Einstellung der Position des Zahns (312a, 312b), der in der mindestens einen Aussparung (313c) entlang des Jochs (311) der mindestens einen Statoranordnung (31) aufgenommen ist, entlang der Bewegungsrichtung durch Einsetzen eines Keils in die mindestens eine Aussparung (313c) zu ermöglichen, beispielsweise um die Entspannungskräfte der Maschine zu reduzieren.

6. - Elektrische Maschine (1) mit linearer Bewegung nach einem der Ansprüche 3 bis 5, **dadurch gekennzeichnet, dass** mindestens eine der Aussparungen (313c), die einen Zahn (312a, 312b) aufnimmt, durch mindestens eine Durchgangsbohrung (313f) verlängert ist, die konfiguriert ist, um eine Schraube (313g) aufzunehmen, die geeignet ist, um einen Druck auf den in der Aussparung (313c) aufgenommenen Zahn (312a, 312b) auszuüben, um einen Kontakt zwischen dem Zahn (312a, 312b) und dem Joch (311) zu verbessern.

7. - Elektrische Maschine (1) mit linearer Bewegung nach einem der Ansprüche 1 bis 6, **dadurch gekennzeichnet, dass** die Befestigungseinrichtungen (314) bei mindestens einer Statoranordnung (31) mindestens eine Plattform (314a) umfassen, wobei jede Plattform (314a) sowohl an dem Gestell (2) als auch an der mindestens einen Statoranordnung (31) befestigt ist.

8. - Elektrische Maschine (1) mit linearer Bewegung nach Anspruch 7, **dadurch gekennzeichnet, dass** die mindestens eine Statoranordnung (31) ferner mindestens eines von Spalteinstellschrauben (314b), die konfiguriert sind, um eine Änderung eines Abstands zwischen der mindestens einen Plattform (314a) und der mindestens einen Backe (313a, 313b) zu ermöglichen, und Spaltkeilen (314c), die zwischen der mindestens einen Plattform (314a) und der mindestens einen Backe (313a, 313b) angeordnet sind, um eine Einstellung des Spalts (6) zwischen den Zähnen (312a, 312b) der mindestens einen Statoranordnung (31) und den gegenüberliegenden Interaktionsteilabschnitten (411) durch mindestens entweder eine Änderung der Anzahl von Spaltkeilen (314c) und eine Änderung der Stärke der Spaltkeile (314c) zu ermöglichen, umfasst.

9. - Elektrische Maschine (1) mit linearer Bewegung nach einem der Ansprüche 1 bis 8, **dadurch gekennzeichnet, dass** der Interaktionsabschnitt (41) der sekundären Anordnung (4) eine Vielzahl von Blechen (411a, 411b), die entlang der Bewegungsrichtung gestapelt sind und miteinander zusammengesetzt sind, und Halterungen (412), die sich entlang der Bewegungsrichtung erstrecken, umfasst, wobei zumindest gewisse Bleche (411b) Vorsprünge (411c) umfassen und die Halterungen (412) konfiguriert sind, um die Vorsprünge (411c) einzugreifen, um das mechanische Halten der sekundären Anordnung (4) zu gewährleisten.

10. - Elektrische Maschine (1) mit linearer Bewegung nach einem der Ansprüche 1 bis 9, **dadurch gekennzeichnet, dass** sich mindestens ein Hohlraum (415), der sich entlang der Bewegungsrichtung erstreckt, in dem mittleren Abschnitt des Interaktionsabschnitts (41) der sekundären Anordnung (4) gebildet ist, um einen magnetischen Kurzschluss in dem Interaktionsabschnitt (41) zu begrenzen.

11. - Elektrische Maschine (1) mit linearer Bewegung nach einem der Ansprüche 1 bis 10, **dadurch gekennzeichnet, dass** die Interaktionsteilabschnitte (411) Vorsprünge aus einem Material umfassen, das geeignet ist, um von einem Magnetfeld angezogen zu werden, die in Richtung der gegenüberliegenden Zähne (312a, 312b) der primären Anordnung (3) hervorstehen.

12. - Elektrische Maschine (1) mit linearer Bewegung nach einem der Ansprüche 1 bis 11, wobei der Magnete (413, 414) zwischen Interaktionsteilabschnitten (411) des Interaktionsabschnitts (41) der sekundären Anordnung (4) angeordnet sind, **dadurch gekennzeichnet, dass** die Interaktionsteilabschnitte (411) Polmassen aus magnetisierbarem Material sind, die durch Magnete (413, 414) magnetisiert werden, die zwischen jeder Polmasse angeordnet sind.

13. - Elektrische Maschine mit linearer Bewegung nach einem der Ansprüche 1 bis 12, **dadurch gekennzeichnet, dass** mindestens eine Statoranordnung (31) ferner einen zusätzlichen Zahn (312h) umfasst, der in Kontakt mit einer seitlichen Kontaktfläche (311b) des Jochs (311) der mindestens einen Statoranordnung (31) angeordnet ist, wobei die mindestens eine Statoranordnung (31) konfiguriert ist, sodass der zusätzliche Zahn (312h) es ermöglicht, eine magnetische Symmetrie der mindestens einen Statoranordnung (31) zu brechen, beispielsweise um die Entspannungskräfte der Maschine (1) zu reduzieren.

14. - Elektrische Maschine (1) mit linearer Bewegung nach einem der Ansprüche 1 bis 13, **dadurch gekennzeichnet, dass** mindestens eine Statoranordnung (31) mittels Befestigungseinrichtungen (314) an dem Gestell (2) befestigt ist, sodass sie während einer Einstellphase der Maschine (1) durch Gleiten in der Bewegungsrichtung bewegt werden kann, um eine Einstellung ihrer Position zu ermöglichen, beispielsweise um Entspannungskräfte der Maschine (1) zu reduzieren.

15. - Elektrische Maschine (1) mit linearer Bewegung nach einem der Ansprüche 1 bis 14, **dadurch gekennzeichnet, dass** mindestens ein Zahn (312a, 312b) eine Vielzahl von ebenen Blechen (312c) umfasst, die in einer Stapelrichtung parallel zu der Bewegungsrichtung gestapelt sind.

16. - Elektrische Maschine mit linearer Bewegung nach einem der Ansprüche 1 bis 15, **dadurch gekennzeichnet, dass** mindestens ein Joch (311) eine Vielzahl von Blechen (311a) umfasst, die in einer Stapelrichtung senkrecht zu einer ersten Achse parallel zu der Bewegungsrichtung und die durch die Mitte des Interaktionsabschnitts (41) der sekundären Anordnung (4) verläuft, und zu einer zweiten Achse gestapelt sind, die der Achse parallel zu der Bewegungsrichtung und die durch die Mitte des mindestens einen Jochs (311) verläuft, entspricht.

17. - Elektrische Maschine (1) mit linearer Bewegung nach einem der Ansprüche 1 bis 16, **dadurch gekennzeichnet, dass** mindestens eines von einem Zahn (312a, 312b) und einem Joch (311) in Form eines aus Magnetpulver geformten Teils vorliegt.

18. - Elektrische Maschine (1) mit linearer Bewegung nach einem der Ansprüche 1 bis 17, **dadurch gekennzeichnet, dass** die Translationsführungseinrichtungen (5) mindestens eines von einer Kugelkufe (51a), die zwischen der primären Anordnung (3) und der sekundären Anordnung (4) angeordnet ist, einer Kugelkufe, die zwischen dem Gestell und der sekundären Anordnung (4) angeordnet ist, und einem translatorischen Wellenführungselement (52), z. B. einem linearen Gleitlager oder einem linearen Kugellager, das zwischen einer Welle (42) und dem Gestell (2) angeordnet ist, umfassen.

19. - Elektrische Maschine (1) mit linearer Bewegung nach einem der Ansprüche 1 bis 18, **dadurch gekennzeichnet, dass** sie ferner ein Gehäuse (2a) umfasst, das konfiguriert ist, um zu jedem Zeitpunkt einer Verwendung zumindest die primäre Anordnung (3) und den Interaktionsabschnitt (41) der sekundären Anordnung (4) zu enthalten.

20. - Elektrische Maschine mit linearer Bewegung nach einem der Ansprüche 1 bis 19, **dadurch gekennzeichnet, dass** die Versatz zwischen den Zähnen in Bewegungsrichtung die folgenden Bedingungen für eine mehrphasige Stromversorgung erfüllen, die aus m Phasen besteht, deren aufeinanderfolgende Phasen mit Aᵢ bezeichnet sind, wobei i eine ganze Zahl zwischen 1 und m ist, bei jedem Paar (312) von Zähnen (312a, 312b) die Spulen (312f) aus einer der Phasen Aᵢ gespeist werden und einer von dem ersten Zahn (312a) und dem zweiten Zahn (312b) mit Aᵢ+ und der andere von dem ersten Zahns (312a) und dem zweiten Zahn (312b) mit Aᵢ- bezeichnet wird; wobei Aᵢ- in Bezug auf Aᵢ+ eine entgegengesetzte Wicklungsrichtung seiner Spule (312f), eine entgegengesetzte Richtung des Stromflusses in seiner Spule (312f) und eine Versorgung seiner Spule (312f) mit einem entgegengesetzten Strom aufweist; wobei die Polteilung mit p bezeichnet wird:
- bei jedem gegebenen Paar h, bestehend aus einem Zahn Aᵢ+ und einem Zahn A_{i+z}+ eines anderen Paars (312) von Zähnen (312a, 312b) gibt es eine relative ganze Zahl kₕ und der Zahn Aᵢ+ ist um kₕ x p + (z/m) x p in der Bewegungsrichtung in Bezug auf den Zahn A_{i+z}+ versetzt, wobei m eine ganze Zahl größer als oder gleich wie 2 ist und i eine ganze Zahl zwischen 1 und m-1 und z eine ganze Zahl zwischen 1 und m-i ist; und
- bei jedem gegebenen Paar (312) von Zähnen (312a, 312b), das einen Zahn Aᵢ+ und einen Zahn Aᵢ- umfasst, ein Versatz zwischen Aᵢ+ und Aᵢ- in der Bewegungsrichtung gleich εₚ x (p/2) ist, wobei εₚ gleich 1 oder -1 ist, abhängig von dem gegebenen Paar (312).

## Claims

1. - A linear movement electrical machine (1) with linear movement in a direction of displacement, configured to operate according to at least one of a motor mode, in which electrical energy is transformed into mechanical energy of linear movement type in the direction of displacement, and a generator mode, in which mechanical energy of the linear movement type in the direction of displacement is transformed into electrical energy, said electrical machine comprising :
- a primary assembly (3) comprising at least one stator assembly (31) configured to be fixed to a frame (2);
- a secondary assembly (4) configured to move relatively with respect to the primary assembly (3) in the direction of displacement, the secondary assembly (4) comprising an interaction part (41) within which a plurality of interaction sub-parts (411) are distributed in the direction of displacement, and at least one shaft (42), which is integral with the interaction part (41) and extends in the direction of displacement,
each stator assembly (31) being arranged opposite the interaction part (41) of the secondary assembly (4);
- translational guide means (5) configured to guide the relative movement of the secondary assembly (4) with respect to the primary assembly (3); and
- an electrical module (7) ;
each stator assembly (31) comprising :
- a yoke (311) which has at least two lateral contact faces (311b), defined on either side of an axis parallel to the direction of displacement and passing through the centre of the yoke (311);
- at least two pairs (312) of teeth (312a, 312b), each tooth (312a, 312b) having a head end (312d) configured to come into contact with a lateral contact face (311b) of the yoke (311) and a base end (312e), opposite the head end (312d), configured to be oriented towards the interaction part (41) of the secondary assembly (4), such that an air gap (6) is formed between the teeth (312a, 312b) and the interaction sub-parts (411) of the secondary assembly (4) and that, upon relative movement of the secondary assembly (4) with respect to the primary assembly (3), an interaction sub-part (411) of the secondary assembly (4) moves relatively parallel to the surface formed by the base ends (312e) of the teeth (312a, 312b) of the opposing stator assembly (31), the pairs (312) of teeth (312a, 312b) being spaced apart along the yoke (311) in the direction of displacement, the teeth (312a, 312b) of a pair (312) of teeth (312a, 312b) being arranged diagonally along the yoke (311) such that, for each pair (312) of teeth (312a, 312b), a first tooth (312a) is in contact with a lateral contact face (311b) of the yoke (311) and a second tooth (312b) is in contact with another lateral contact face (311b) of the yoke (311), a coil (312f) surrounding each tooth (312a, 312b) around a body section (312g) between the head end (312d) and the base end (312e), and each tooth (312a, 312b) being configured to interact magnetically with opposing interacting sub-parts (411) of the opposing secondary assembly (4) ;
- securing means (313) configured to be able to secure the teeth (312a, 312b) to the yoke (311), the securing means (313) being configured such that at least one of the following conditions is satisfied:
a) for at least one stator assembly (31), the securing means (313) comprise at least one resin-type material configured to encapsulate the teeth (312a, 312b) on the yoke (311) ;
b) for at least one stator assembly (31), the securing means (313) comprise two jaws (313a, 313b), arranged on either side of the yoke (311), configured to secure the teeth (312a, 312b) to the yoke (311), each jaw (313a, 313b) comprising at least one plate, a first jaw (313a) being intended to receive the first teeth (312a) of the pairs (312) of teeth (312a, 312b) and a second jaw (313b) being intended to receive the second teeth (312b) of the pairs (312) of teeth (312a, 312b), and both jaws (313a, 313b) being configured to be made integral with each other so as to bring the teeth (312a, 312b) and the yoke (311) into contact;
c) for at least one stator assembly (31), at least one of the teeth (312a, 312b) is welded to the yoke (311);
d) for at least one stator assembly (31), at least one of the teeth (312a, 312b) is bonded to the yoke (311);
e) for at least one stator assembly (31), the yoke (311) comprises a groove, extending in the direction of displacement, and the teeth (312a, 312b) comprise projections configured to engage the groove, or vice versa; and
- fixing means (314) configured to fix the stator assembly (31) to the frame (2);
the linear movement electrical machine (1) further comprising at least one of magnets (413, 414) arranged between interaction sub-parts (411) of the interaction part (41) of the secondary assembly (4), and magnets (315) arranged between the teeth (312a, 312b) and the yoke (311) of at least one stator assembly (31);
in motor mode, the electrical module (7) is configured to transmit a polyphase AC supply to the coils (312f) so as to generate time-varying magnetic fields,
each coil (312f) being configured and powered to generate a magnetic polarity at the base end (312e) of the tooth (312a, 312b) that it surrounds and to generate an opposite magnetic polarity at the head end (312d) of the tooth (312a, 312b) that it surrounds, and the coils (312f) of each pair (312) of teeth (312a, 312b) being configured to generate a polarity at the base end (312e), respectively at the head end (312d), of the first tooth (312a) and to generate an opposite polarity at the base end (312e), respectively at the head end (312d), of the second tooth (312b), so as to create a transverse magnetic loop between said first tooth (312a), the yoke (311) and said second tooth (312b), and
the coils (312f) of each pair (312) of teeth (312a, 312b) being configured and powered such that the produced magnetic fields vary as a function of variations in the polyphase AC supply so as to produce a relative displacement of the secondary assembly (4) with respect to the primary assembly (3) ;
in generator mode, the electrical module (7) is configured to recover electrical currents generated, in the coils (312f) surrounding the teeth (312a, 312b) of the primary assembly (3), by magnetic interactions formed between the interaction part (41) of the secondary assembly (4) and the teeth (312a, 312b) of the primary assembly (3).

2. - The linear movement electrical machine (1) of claim 1, **characterized in that**, for at least one tooth (312a, 312b), a projected area of the base end (312e) onto the interaction part (41) is greater than a projected area of the body section (312g) onto the interaction part (41).

3. - The linear movement electrical machine (1) according to claim 1 when condition b) is satisfied, **characterized in that** each jaw (313a, 313b) comprises at least as many recesses (313c) as there are pairs (312) of teeth (312a, 312b), each recess (313c) being configured to be able to receive a tooth (312a, 312b), each jaw (313a, 313b) further comprising locking means configured to lock each tooth (312a, 312b) in the recess (313c) in which it is received.

4. - The linear movement electrical machine (1) according to claim 3, **characterized in that** the locking means comprise at least one wedge (313d) configured to be arranged in a recess (313c) and to be able to be displaced in said recess (313c), along the tooth (312a, 312b) received in said recess (313c), in order to lock said tooth (312a, 312b) in said recess (313c).

5. - The linear movement electrical machine (1) according to claim 3 or according to claim 4, **characterized in that** the dimensions of at least one of the recesses (313c) receiving a tooth (312a, 312b) are chosen to allow adjustment of the position of the tooth (312a, 312b) received in said at least one recess (313c) along the yoke (311) of said at least one stator assembly (31), in the direction of displacement, by inserting a wedge in said at least one recess (313c), for example to reduce the expansion forces of the machine.

6. - The linear movement electrical machine (1) according to any one of claims 3 to 5, **characterized in that** at least one of the recesses (313c) receiving a tooth (312a, 312b) is extended by at least one through hole (313f) configured to receive a screw (313g) able to apply a pressure on the tooth (312a, 312b) received in said recess (313c), so as to improve a contact between said tooth (312a, 312b) and said yoke (311).

7. - The linear movement electrical machine (1) according to any one of claims 1 to 6, **characterized in that**, for at least one stator assembly (31), the fixing means (314) comprise at least one platform (314a), each platform (314a) being fixed both to the frame (2) and the at least one stator assembly (31).

8. - The linear movement electrical machine (1) according to claim 7, **characterized in that** the at least one stator assembly (31) further comprises at least one of air gap adjustment screws (314b) configured to allow a change in a spacing between the at least one platform (314a) and the at least one jaw (313a, 313b), and
air gap wedges (314c) arranged between the at least one platform (314a) and the at least one jaw (313a, 313b), so as to allow adjustment of the air gap (6) between the teeth (312a, 312b) of said at least one stator assembly (31) and the opposing interaction sub-parts (411), by at least one of changing the number of air gap wedges (314c) and changing the thickness of the air gap wedges (314c).

9. - The linear movement electrical machine (1) according to any one of claims 1 to 8, **characterized in that** the interaction part (41) of the secondary assembly (4) comprises a plurality of sheets (411a, 411b) which are stacked in the direction of displacement and are joined together, and supports (412) which extend in the direction of displacement, at least some sheets (411b) comprising protuberances (411c), and the supports (412) being configured to engage with the protuberances (411c) in order to ensure the mechanical strength of the secondary assembly (4).

10. - The linear movement electrical machine (1) according to any one of claims 1 to 9, **characterized in that** at least one cavity (415), extending in the direction of displacement, is formed in the central part of the interaction part (41) of the secondary assembly (4), so as to limit a magnetic short circuit in the interaction part (41).

11. - The linear movement electrical machine (1) according to any one of claims 1 to 10, **characterized in that** the interaction sub-parts (411) comprise projections made of a material able to be attracted by a magnetic field, projecting towards opposing teeth (312a, 312b) of the primary assembly (3) .

12. - The linear movement electrical machine (1) according to any one of claims 1 to 11, wherein magnets (413, 414) are arranged between interaction sub-parts (411) of the interaction part (41) of the secondary assembly (4), **characterized in that** the interaction sub-parts (411) are pole masses, made of magnetisable material, magnetised by magnets (413, 414) arranged between each pole mass.

13. - The linear movement electrical machine according to any one of claims 1 to 12, **characterized in that** at least one stator assembly (31) further comprises an additional tooth (312h) arranged in contact with a lateral contact face (311b) of the yoke (311) of said at least one stator assembly (31), said at least one stator assembly (31) being configured such that said additional tooth (312h) makes it possible to break a magnetic symmetry of said at least one stator assembly (31), for example to reduce the expansion forces of the machine (1).

14. - The linear movement electrical machine (1) according to any one of claims 1 to 13, **characterized in that** at least one stator assembly (31) is fixed to the frame (2) by means of fixing means (314) so as to be able to be moved, during an adjustment phase of the machine (1), by sliding in the direction of displacement in order to allow its position to be adjusted, for example to reduce expansion forces of the machine (1).

15. - The linear movement electrical machine (1) according to any one of claims 1 to 14, **characterized in that** at least one tooth (312a, 312b) comprises a plurality of flat sheets (312c) stacked in a stacking direction parallel to the direction of displacement.

16. - The linear movement electrical machine according to any one of claims 1 to 15, **characterized in that** at least one yoke (311) comprises a plurality of sheets (311a) stacked in a stacking direction perpendicular to a first axis, parallel to the direction of displacement and passing through the centre of the interaction part (41) of the secondary assembly (4), and to a second axis, which corresponds to the axis parallel to the direction of displacement and passing through the centre of said at least one yoke (311).

17. - The linear movement electrical machine (1) according to any one of claims 1 to 16, **characterized in that** at least one of a tooth (312a, 312b) and a yoke (311) is in the form of a part formed from magnetic powder.

18. - The linear movement electrical machine (1) according to any one of claims 1 to 17, **characterized in that** the translational guide means (5) comprise at least one of a ball-bearing glide (51a) arranged between the primary assembly (3) and the secondary assembly (4), a ball-bearing glide arranged between the frame and the secondary assembly (4), and a translational shaft guide element (52), for example a linear plain bearing or a linear ball bearing, arranged between a shaft (42) and the frame (2).

19. - The linear movement electrical machine (1) according to any one of claims 1 to 18, **characterized in that** it further comprises a casing (2a) configured to contain, at any instant of use, at least the primary assembly (3) and the interaction part (41) of the secondary assembly (4).

20. - The linear movement electrical machine according to any one of claims 1 to 19, **characterized in that** the offsets between the teeth, in the direction of displacement, comply with the following conditions for a polyphase supply consisting of m phases, the successive phases of which are denoted Aᵢ with i being an integer between 1 and m, for each pair (312) of teeth (312a, 312b), the coils (312f) being supplied from one of the phases Aᵢ and one of the first tooth (312a) and the second tooth (312b) being denoted Ai+ and the other of the first tooth (312a) and the second tooth (312b) being denoted Aᵢ-; Aᵢ- having, with respect to Aᵢ+, one of an opposite direction of winding of its coil (312f), an opposite direction of current flow in its coil (312f), and supply of its coil (312f) with an opposite current; the pole pitch being noted p :
- for each given pair h, composed of a tooth Aᵢ+ and a tooth A_{i+z}+, of another pair (312) of teeth (312a, 312b), there is a relative integer kh, and the tooth Aᵢ+ is offset by kₕ x p + (z/m) x p in the direction of displacement with respect to the tooth A_{i+z}+, with m being an integer greater than or equal to 2, and for i an integer between 1 and m-1 and z an integer between 1 and m-i; and
- for each given pair (312) of teeth (312a, 312b) comprising a tooth Aᵢ+ and a tooth Aᵢ-, an offset between Aᵢ+ and Aᵢ- in the direction of displacement is equal to εₚ x (p/2), with εₚ being equal to 1 or -1 according to the given pair (312).
